(19) Europäisches Patentamt
European Patent Office
Office européen des brevets

(11) **EP 4 708 141 A1**

(12) **EUROPEAN PATENT APPLICATION**
published in accordance with Art. 153(4) EPC

(43) Date of publication:
**11.03.2026 Bulletin 2026/11**

(21) Application number: **24814260.6**

(22) Date of filing: **22.05.2024**

(51) International Patent Classification (IPC):
**G06N 3/0495** (2023.01)

(86) International application number:
**PCT/CN2024/094605**

(87) International publication number:
**WO 2024/245061 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.05.2023 CN 202310621628**

(71) Applicant: **Huawei Technologies Co., Ltd.
Shenzhen, Guangdong 518129 (CN)**

(72) Inventors:
• **LIU, Chuanjian
Shenzhen, Guangdong 518129 (CN)**

• **HAN, Kai
Shenzhen, Guangdong 518129 (CN)**
• **ZHANG, Baochang
Beijing 100191 (CN)**
• **XU, Sheng
Beijing 100191 (CN)**
• **LI, Yanjing
Beijing 100191 (CN)**
• **WANG, Yunhe
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **DATA PROCESSING METHOD AND APPARATUS**

(57)    This application relates to the artificial intelligence field, and discloses a data processing method, including: obtaining a first query (query) corresponding to a first neural network and a second query corresponding to a second neural network, where the first query is a query obtained by maximizing an information entropy of a query corresponding to the first neural network, the first neural network is a model obtained by compressing the second neural network, and the first neural network and the first neural network are used for object detection; determining a first loss based on the first query and the second query, where the first loss indicates to minimize an information difference between the second query and the first query; and updating the first neural network and the first query based on the first loss. In this application, an information difference between a query (query) of a student model and a query of a teacher model is minimized, to minimize an information difference between the student model and the teacher model, and improve model precision of a compressed model.

```
┌─────────────────────────────────────────────────────────┐
│ Obtain a first query (query) corresponding to a first    │
│ neural network and a second query corresponding to a     │    601
│ second neural network, where the first query is a query  │
│ obtained by maximizing an information entropy of a query  │
│ corresponding to the first neural network, the first      │
│ neural network is a model obtained by compressing the     │
│ second neural network, and the first neural network and   │
│ the first neural network are used for object detection    │
└─────────────────────────────────────────────────────────┘
                            │
                            ▼
┌─────────────────────────────────────────────────────────┐
│ Determine a first loss based on the first query and the   │    602
│ second query, where the first loss indicates to minimize  │
│ an information difference between the second query and     │
│ the first query                                           │
└─────────────────────────────────────────────────────────┘
                            │
                            ▼
┌─────────────────────────────────────────────────────────┐
│ Update the first neural network and the first query       │    603
│ based on the first loss                                   │
└─────────────────────────────────────────────────────────┘
```

FIG. 6

## Description

This application claims priority to Chinese Patent Application No. 202310621628.2, filed with the China National Intellectual Property Administration on May 29, 2023 and entitled "DATA PROCESSING METHOD AND APPARATUS", which is incorporated herein by reference in its entirety.

## TECHNICAL FIELD

This application relates to the artificial intelligence field, and in particular, to a data processing method and apparatus.

## BACKGROUND

Object detection is intended to locate and classify a visual object in an input image. During early operation, this task is usually implemented by processing a regional feature of the input image based on a convolutional neural network. Recently, a transformer-based object detector has been proposed, where object detection is considered as a set prediction task and may be trained end to end. This greatly simplifies an object detection task, and a user does not need to perform tedious adjustment on a manually designed component, for example, a size or a proportion of an anchor. Despite an excellent capability, the object detector usually has a large quantity of parameters and floating-point operations (FLOPs). For example, in an object detector (DETR-R50) with a ResNet-50 as a backbone network, 39.8M parameters occupy a memory of 159 MB and consume a computing amount of 86G FLOPs. A large amount of memory and computing power is needed during inference. This limits deployment of a model on a platform with limited resources.
To implement efficient online inference, many operations have been performed to compress and accelerate a neural network, including compact network design, network pruning, lower-order decomposition, quantization, knowledge distillation, and the like. Quantization and pruning are especially suitable for deployment on an AI chip, to reduce a quantity of network parameters and activation values, and implement efficient inference. However, parameters of a compressed model greatly change compared with parameters of an uncompressed model, leading to a decrease in model precision. Especially when quantization is performed to retain an ultra-small quantity of bits (4 bits or fewer), performance is sharply degraded.

## SUMMARY

This application provides a data processing method, to improve model precision of a compressed visual detection model.
According to a first aspect, this application provides a data processing method. The method includes: obtaining a first query (query) corresponding to a first neural network and a second query corresponding to a second neural network, where the first query is a query obtained by maximizing an information entropy of a query corresponding to the first neural network, the first neural network is a model obtained by compressing the second neural network, and the first neural network and the first neural network are used for object detection; determining a first loss based on the first query and the second query, where the first loss indicates to minimize an information difference between the second query and the first query; and updating the first neural network and the first query based on the first loss.
In this application, an information difference between a query (query) of a student model and a query of a teacher model is minimized, to minimize an information difference between the student model and the teacher model, and improve model precision of a compressed model.
For example, the first neural network may be a model obtained by quantizing the second neural network, or may be a network that is smaller and faster than the second neural network and that is obtained through pruning, structural redesign, or the like.
In a possible implementation, the first neural network is obtained by performing 2-bit, 3-bit, or 4-bit quantization on the second neural network.
In a possible implementation, the method further includes: performing object detection on a target image based on the first query and the first neural network, to obtain information about M first bounding boxes; obtaining a detection result ground-truth corresponding to the target image, where the detection result ground-truth includes a plurality of second bounding boxes; and determining M1 first bounding boxes from the M first bounding boxes based on a positional relationship between the first bounding box and the second bounding box, where each of the M1 first bounding boxes corresponds to one second bounding box, a positional relationship between each of the M1 first bounding boxes and a corresponding second bounding box meets a first preset condition, the first preset condition is related to a degree of overlapping between areas in which bounding boxes are located, and the first query is a query corresponding to the M1 first bounding boxes.

In a possible implementation, the method further includes: performing object detection on the target image based on the second query and the second neural network, to obtain information about N third bounding boxes; and determining M1 third bounding boxes from the N third bounding boxes based on a positional relationship between each of the M1 first bounding boxes and the third bounding box, where each of the M1 first bounding boxes corresponds to one second bounding box, a positional relationship between each of the M1 first bounding boxes and a corresponding third bounding box meets a second preset condition, the second preset condition is related to a degree of overlapping between areas in which bounding boxes are located, and the second query is a query corresponding to the M1 third bounding boxes.

To minimize a conditional entropy, one-to-one matching needs to be performed between a detection result of the student model and a detection result of the teacher model. To be specific, all of bounding boxes output by the student model need to be in a one-to-one correspondence with bounding boxes output by the teacher model. During determining of a correspondence between the detection result of the student model and the detection result of the teacher model, a correspondence between the detection result of the student model and a ground-truth of an image detection result may be first determined.

Due to discreteness of algorithm matching and randomness of model training, ground-truth (ground-truth) matching (to be specific, matching between an output of the student model and a ground-truth of an image detection result of an image) becomes a dynamic and unstable process. For example, the ground-truth of the image detection result includes five bounding boxes, and the detection result of the student model includes eight bounding boxes. Embodiments of this application provide foreground-aware query matching to resolve this problem. Specifically, matching is performed between the ground-truth of the image detection result and the detection result output by the student model, a bounding box (for example, a bounding box whose positional relationship meets a preset condition) that can match the ground-truth of the image detection result is determined from the detection result output by the student model, and a one-to-one correspondence is established between the determined bounding box and the ground-truth of the image detection result. That is, a bounding box with a more accurate foreground awareness capability among bounding boxes output by the student model is selected.

In a possible implementation, the information about the first bounding box and the information about the third bounding box include a position and a size of the bounding box, and a category corresponding to image content of the bounding box.

In a possible implementation, the first query is obtained by adjusting, to a distribution of a preset type, a distribution of the query corresponding to the first neural network.

In a possible implementation, the distribution of the preset type is a Gaussian distribution.

In a possible implementation, the information difference is represented by an L2 norm or a conditional entropy.

In a possible implementation, the first neural network includes a first backbone network, a first encoder, and a first decoder, and the second neural network includes a second backbone network, a second encoder, and a second decoder; performing object detection on the target image based on the first query and the first neural network includes:

    obtaining a first intermediate output based on the target image by using the first backbone network and the first encoder; and
    processing the first query and the first intermediate output by using the first decoder; and
    performing object detection on the target image based on the second query and the second neural network includes:

        obtaining a second intermediate output based on the target image by using the second backbone network and the second encoder; and
        processing the second query and the second intermediate output by using the second decoder.

According to a second aspect, this application provides a data processing method. The method includes:

    obtaining an image; and
    performing object detection on the image by using an updated first neural network and an updated first query that are obtained according to any one of the implementations of the first aspect, to obtain a processing result.

According to a third aspect, this application provides a data processing apparatus. The apparatus includes:

    an obtaining module, configured to obtain a first query (query) corresponding to a first neural network and a second query corresponding to a second neural network, where the first query is a query obtained by maximizing an information entropy of a query corresponding to the first neural network, the first neural network is a model obtained by compressing the second neural network, and the first neural network and the first neural network are used for object detection; and
    a processing module, configured to: determine a first loss based on the first query and the second query, where the first loss indicates to minimize an information difference between the second query and the first query; and

update the first neural network and the first query based on the first loss.

In a possible implementation, the first neural network is obtained by performing 2-bit, 3-bit, or 4-bit quantization on the second neural network.

In a possible implementation, the processing module is further configured to:

perform object detection on a target image based on the first query and the first neural network, to obtain information about M first bounding boxes;

obtain a detection result ground-truth corresponding to the target image, where the detection result ground-truth includes a plurality of second bounding boxes; and

determine M1 first bounding boxes from the M first bounding boxes based on a positional relationship between the first bounding box and the second bounding box, where each of the M1 first bounding boxes corresponds to one second bounding box, a positional relationship between each of the M1 first bounding boxes and a corresponding second bounding box meets a first preset condition, and the first preset condition is related to a degree of overlapping between areas in which bounding boxes are located; and

the first query is a query corresponding to the M1 first bounding boxes.

In a possible implementation, the processing module is further configured to:

perform object detection on the target image based on the second query and the second neural network, to obtain information about N third bounding boxes; and

determine M1 third bounding boxes from the N third bounding boxes based on a positional relationship between each of the M1 first bounding boxes and the third bounding box, where each of the M1 first bounding boxes corresponds to one second bounding box, a positional relationship between each of the M1 first bounding boxes and a corresponding third bounding box meets a second preset condition, and the second preset condition is related to a degree of overlapping between areas in which bounding boxes are located; and

the second query is a query corresponding to the M1 third bounding boxes.

In a possible implementation, the information about the first bounding box and the information about the third bounding box include a position and a size of the bounding box, and a category corresponding to image content of the bounding box.

In a possible implementation, the first query is obtained by adjusting, to a distribution of a preset type, a distribution of the query corresponding to the first neural network.

In a possible implementation, the distribution of the preset type is a Gaussian distribution.

In a possible implementation, the information difference is represented by an L2 norm or a conditional entropy.

In a possible implementation, the first neural network includes a first backbone network, a first encoder, and a first decoder, and the second neural network includes a second backbone network, a second encoder, and a second decoder; and

the processing module is specifically configured to:

obtain a first intermediate output based on the target image by using the first backbone network and the first encoder;

process the first query and the first intermediate output by using the first decoder;

obtain a second intermediate output based on the target image by using the second backbone network and the second encoder; and

process the second query and the second intermediate output by using the second decoder.

According to a fourth aspect, this application provides a data processing apparatus. The apparatus includes:

an obtaining module, configured to obtain an image; and

a processing module, configured to perform object detection on the image by using an updated first neural network and an updated first query that are obtained according to the first aspect, to obtain a processing result.

According to a fifth aspect, an embodiment of this application provides a data processing apparatus. The apparatus may include a memory, a processor, and a bus system. The memory is configured to store a program. The processor is configured to execute the program in the memory, to perform the method according to any one of the first aspect or the optional implementations of the first aspect, or the method according to any one of the second aspect or the optional implementations of the second aspect.

According to a sixth aspect, an embodiment of this application provides a computer-readable storage medium. The computer-readable storage medium stores a computer program. When the computer program is run on a computer, the computer is enabled to perform the method according to any one of the first aspect or the optional implementations of the first aspect, or the method according to any one of the second aspect or the optional implementations of the second aspect.

According to a seventh aspect, an embodiment of this application provides a computer program. When the computer program is run on a computer, the computer is enabled to perform the method according to any one of the first aspect or the optional implementations of the first aspect, or the method according to any one of the second aspect or the optional implementations of the second aspect.

According to an eighth aspect, this application provides a chip system. The chip system includes a processor, configured to support an execution device or a training device in implementing the functions in the foregoing aspects, for example, sending or processing data or information in the foregoing methods. In a possible design, the chip system further includes a memory. The memory is configured to store program instructions and data that are necessary for the execution device or the training device. The chip system may include a chip, or may include a chip and another discrete component.

## BRIEF DESCRIPTION OF DRAWINGS

FIG. 1A is a diagram of a structure of a main framework of artificial intelligence;

FIG. 1B to FIG. 1D are diagrams of an application framework according to this application;

FIG. 2 is a diagram of an application framework according to this application;

FIG. 3 is a diagram of an application framework according to this application;

FIG. 4 is a diagram of an application framework according to this application;

FIG. 5A is a diagram of an application scenario according to this application;

FIG. 5B to FIG. 5E are diagrams of a network structure according to this application;

FIG. 6 is a schematic flowchart of a data processing method according to an embodiment of this application;

FIG. 7 is a diagram of a process according to an embodiment of this application;

FIG. 8 is a diagram of a structure of a data processing apparatus according to an embodiment of this application;

FIG. 9 is a diagram of a structure of an execution device according to an embodiment of this application;

FIG. 10 is a diagram of a structure of a training device according to an embodiment of this application; and

FIG. 11 is a diagram of a structure of a chip according to an embodiment of this application.

## DESCRIPTION OF EMBODIMENTS

The following describes embodiments of the present invention with reference to the accompanying drawings in embodiments of the present invention. Terms used in embodiments of the present invention are merely intended to describe specific embodiments of the present invention, but not to limit the present invention.

The following describes embodiments of this application with reference to the accompanying drawings. A person of ordinary skill in the art can know that the technical solutions provided in embodiments of this application are also applicable to similar technical problems with development of technologies and emergence of new scenarios.

In this specification, the claims, and the accompanying drawings of this application, the terms "first", "second", and the like are intended to distinguish between similar objects but do not necessarily indicate a specific order or sequence. It should be understood that the terms used in this way are interchangeable in proper circumstances and are merely intended for distinguishing when objects having a same attribute are described in embodiments of this application. In addition, the terms "include", "have", and any variants thereof are intended to cover a non-exclusive inclusion, so that a process, method, system, product, or device that includes a list of units is not necessarily limited to those units, but may include other units that are not expressly listed or are inherent to the process, method, product, or device.

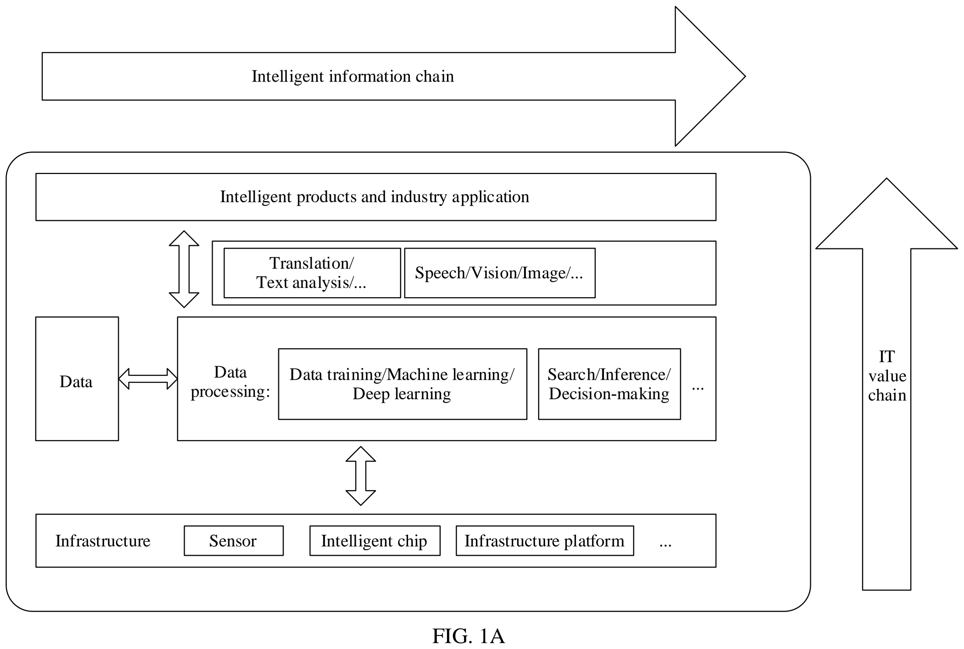

First, an overall operation process of an artificial intelligence system is described. FIG. 1A is a diagram of a structure of a main framework of artificial intelligence. The following describes the main framework of artificial intelligence from two dimensions: "intelligent information chain" (a horizontal axis) and "IT value chain" (a vertical axis). The "intelligent information chain" indicates a process from data obtaining to data processing. For example, the process may be a general process of intelligent information perception, intelligent information representation and formation, intelligent inference, intelligent decision-making, and intelligent execution and output. In this process, data undergoes a refinement process of "data-information-knowledge-intelligence". The "IT value chain" indicates value brought by artificial intelligence to the information technology industry in a process from underlying infrastructure and information (implemented by providing and processing technologies) of artificial intelligence to industrial ecology of a system.

(1) Infrastructure

The infrastructure provides computing capability support for the artificial intelligence system, implements communication with the outside world, and implements support through an infrastructure platform. Communication with the outside is performed through a sensor. A computing capability is provided by an intelligent chip (a hardware acceleration chip, for example, a CPU, an NPU, a GPU, an ASIC, or an FPGA). The infrastructure platform includes platform assurance and support related to a distributed computing framework, a network, and the like, and may include cloud storage and computing, an interconnection network, and the like. For example, the sensor communicates with the outside to obtain data, and the data is provided for an intelligent chip in a distributed computing system provided by the infrastructure platform to perform computing.

(2) Data

Data at an upper layer of the infrastructure indicates a data source in the artificial intelligence field. The data relates to graphics, images, speech, and text, and further relates to internet of things data of conventional devices, including service data of an existing system and perception data such as force, displacement, a liquid level, temperature, and humidity.

(3) Data processing

The data processing usually includes data training, machine learning, deep learning, searching, inference, decision-making, and the like.

The machine learning and the deep learning may be used for performing symbolic and formal intelligent information modeling, extraction, preprocessing, training, and the like on data.

The inference is a process of performing machine thinking and solving problems by simulating an intelligent inference mode of humans in a computer or intelligent system by using formal information and according to an inference control policy. A typical function is searching and matching.

The decision-making is a process of making a decision after intelligent information is inferred, and usually provides classification, ranking, prediction, and other functions.

(4) General capabilities

After data undergoes the foregoing data processing, some general capabilities may be further formed based on a data processing result. For example, the general capabilities may be an algorithm or a general system, for example, translation, text analysis, computer vision processing, speech recognition, and image recognition.

(5) Intelligent products and industry application

The intelligent products and the industry application are products and application of the artificial intelligence system in various fields, are obtained by packaging an overall artificial intelligence solution, and implement productization and practical application of intelligent information decision-making. Application fields of the artificial intelligence system include intelligent terminals, intelligent transportation, intelligent healthcare, autonomous driving, a smart city, and the like.

This application may be applied to the image processing field in the artificial intelligence field. Image processing is used below as an example to describe a plurality of application scenarios implemented in products.

Application scenarios of this application are first described.

This application may be applied to, but not limited to, an application with an image processing function (which may be referred to as an image processing application below), a cloud service provided by a cloud-side server, or the like. Descriptions are separately provided below.

1. Image processing application:

In embodiments of this application, a product form may be an image processing application, and in particular, may be an application with an image segmentation function. The image processing application may be run on a terminal device or a cloud-side server.

In a possible implementation, the image processing application may implement an image segmentation task, an object detection task, or the like based on an input image, to obtain a processing result. The processing result may be an image segmentation result (a mask area) or a detection result (for example, including a bounding box and a category).

In a possible implementation, a user may start an image processing application installed on a terminal device, and input an image. The image processing application may process the image by using a neural network model obtained through training according to a method provided in embodiments of this application, and present a processing result to the user (a presentation manner may be but is not limited to displaying, saving, or uploading to a cloud side).

In a possible implementation, a user may start an image processing application installed on a terminal device, and input an image. The image processing application may send the image to a cloud-side server. The cloud-side server processes the image by using a neural network model obtained through training according to a method provided in embodiments of this application, and sends a processing result back to the terminal device. The terminal device may present the processing result to the user (a presentation manner may be but is not limited to displaying, saving, uploading to a cloud side, or the like).

The following describes the image processing application in embodiments of this application separately from a perspective of a functional architecture and a perspective of a product architecture for implementing a function.

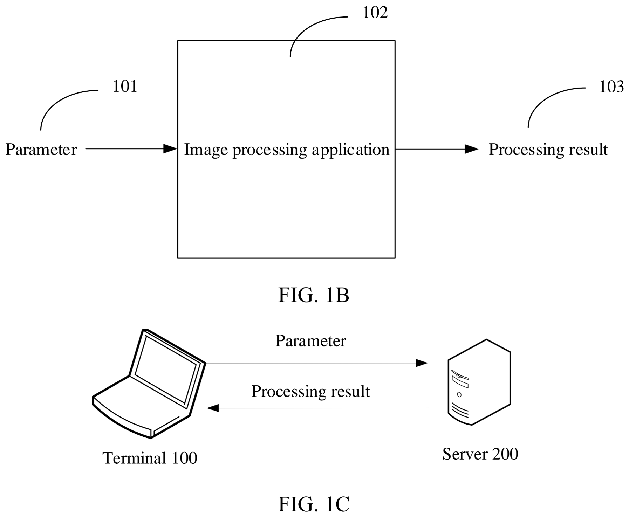

FIG. 1B is a diagram of a functional architecture of an image processing application according to an embodiment of this application.

In a possible implementation, as shown in FIG. 1B, the image processing application 102 may receive an input parameter 101 (for example, including an image) and generate a processing result 103. The image processing application 102 may be executed (for example) in at least one computer system, and includes computer code. When the computer code is executed by one or more computers, the computer is enabled to perform a method provided in embodiments of this application.

FIG. 1C is a diagram of an entity architecture for running an image processing application according to an embodiment of this application.

FIG. 1C is a diagram of an architecture of a system. The system may include a terminal 100 and a server 200. The server 200 may include one or more servers (in FIG. 1C, an example in which the server 200 includes one server is used for description), and the server 200 may provide, for one or more terminals, a method provided in embodiments of this application.

An image processing application may be installed on the terminal 100. The application and a web page may provide an interface. The terminal 100 may receive a related parameter input by a user on an image processing interface, and send the parameter to the server 200. The server 200 may obtain a processing result based on the received parameter, and return the processing result to the terminal 100.

It should be understood that, in some optional implementations, the terminal 100 may alternatively autonomously complete an action of obtaining a processing result based on a received parameter, without cooperation of the server. This is not limited in embodiments of this application.

The following describes a product form of the terminal 100 in FIG. 1C.

In embodiments of this application, the terminal 100 may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

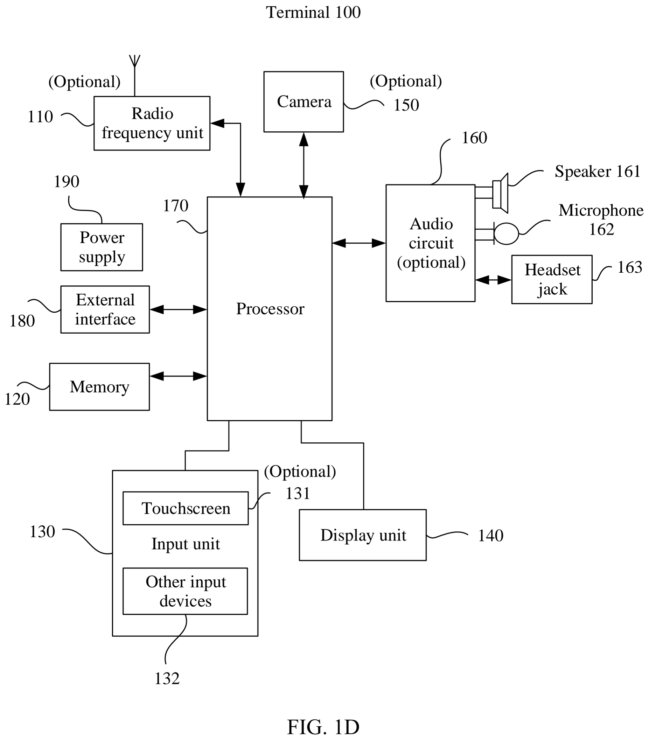

FIG. 1D is a diagram of an optional hardware structure of the terminal 100.

As shown in FIG. 1D, the terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art can understand that FIG. 1D is merely an example of the terminal or a multi-functional device but constitutes no limitation on the terminal or the multi-functional device. The terminal or the multi-functional device may include more or fewer components than those shown in the figure, or some components may be combined, or there may be different components.

The input unit 130 may be configured to receive input digital or character information, and generate a key signal input related to a user setting and function control of the portable multi-functional apparatus. Specifically, the input unit 130 may include a touchscreen 131 (optional) and/or other input devices 132. The touchscreen 131 may collect a touch operation performed by a user on or near the touchscreen 131 (for example, an operation performed by the user on or near the touchscreen by using any proper object such as a finger, a joint, or a stylus), and drive a corresponding connection apparatus based on a preset program. The touchscreen may detect a touch action performed by the user on the touchscreen, convert the touch action into a touch signal, and send the touch signal to the processor 170, and can receive a command sent by the processor 170 and execute the command. The touch signal includes at least touch point coordinate information. The touchscreen 131 may provide an input interface and an output interface between the terminal 100 and the user. In addition, the touchscreen may be implemented in a plurality of types such as a resistive type, a capacitive type, an infrared ray type, and a surface acoustic wave type. In addition to the touchscreen 131, the input unit 130 may further include the other input devices. Specifically, the other input devices 132 may include but are not limited to one or more of the following: a physical keyboard, a functional key (for example, a volume control key or an on/off key), a trackball, a mouse, a joystick, and the like.

The input device 132 may receive an input image or the like.

The display unit 140 may be configured to display information input by the user, information provided for the user, various menus of the terminal 100, an interaction interface, a file, and/or playing of any multimedia file. In embodiments of this application, the display unit 140 may be configured to display an interface, a processing result, and the like of an image processing application.

The memory 120 may be configured to store instructions and data. The memory 120 may mainly include an instruction storage area and a data storage area. The data storage area may store various types of data such as a multimedia file and text. The instruction storage area may store software units such as an operating system, an application, and instructions for at least one function, or subsets and extended sets thereof. The memory 120 may further include a non-volatile random access memory, and provide the following for the processor 170: managing hardware, software, and data resources on a computing processing device, and supporting control on software and an application. The memory 120 is further configured to store a multimedia file, and store a running program and an application.

The processor 170 is a control center of the terminal 100, connects various parts of the entire terminal 100 through various interfaces and lines, and performs various functions of the terminal 100 and processes data by running or executing the instructions stored in the memory 120 and invoking the data stored in the memory 120, to implement overall control on the terminal device. Optionally, the processor 170 may include one or more processing units. Preferably, an application processor and a modem processor may be integrated into the processor 170. The application processor mainly processes an operating system, a user interface, an application program, and the like. The modem processor mainly processes wireless communication. It can be understood that the modem processor may alternatively not be integrated into the processor 170. In some embodiments, the processor and the memory may be implemented on a single chip. In some embodiments, the processor and the memory may alternatively be implemented on separate chips. The processor 170 may be further configured to: generate a corresponding operation control signal, send the operation control signal to a corresponding component in the computing processing device, and read and process data in software, especially, read and process the data and the program in the memory 120, to enable each functional module to perform a corresponding function, to control a corresponding component to perform an action according to a requirement of an instruction.

The memory 120 may be configured to store software code related to a data processing method. The processor 170 may perform steps of a data processing method of a chip, or may schedule another unit (for example, the input unit 130 and the display unit 140) to implement a corresponding function.

The radio frequency unit 110 (optional) may be configured to send and receive signals in an information sending/receiving process or a call process, for example, receive downlink information from a base station and then send the downlink information to the processor 170 for processing, or send uplink-related data to a base station. Usually, an RF circuit includes but is not limited to an antenna, at least one amplifier, a transceiver, a coupler, a low noise amplifier (Low Noise Amplifier, LNA), a duplexer, and the like. In addition, the radio frequency unit 110 may further communicate with a network device and another device through wireless communication. Any communication standard or protocol may be used for the wireless communication, including but not limited to a global system for mobile communications (Global System for Mobile Communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

In embodiments of this application, the radio frequency unit 110 may send an image to the server 200, and receive a processing result sent by the server 200.

It should be understood that the radio frequency unit 110 is optional, and may be replaced with another communication interface, for example, may be a network interface.

The terminal 100 further includes the power supply 190 (for example, a battery) for supplying power to various components. Preferably, the power supply may be logically connected to the processor 170 through a power management system, to implement functions such as charging and discharging management and power consumption management through the power management system.

The terminal 100 further includes the external interface 180. The external interface may be a standard micro USB interface or a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein. Some or all of methods described below may be applied to the terminal 100 shown in FIG. 1D.

The following describes a product form of the server 200 in FIG. 1C.

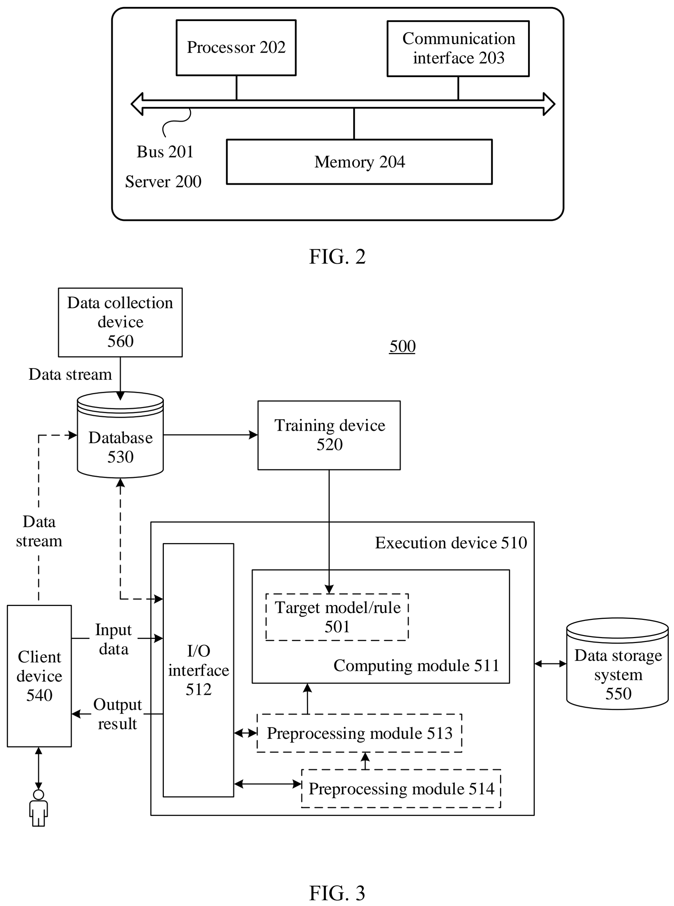

FIG. 2 is a diagram of a structure of the server 200. As shown in FIG. 2, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used in FIG. 2 for representation, but this does not mean that there is only one bus or only one type of bus.

The processor 202 may be any one or more of the following processors: a central processing unit (central processing unit, CPU), a graphics processing unit (graphics processing unit, GPU), a microprocessor (microprocessor, MP), a digital signal processor (digital signal processor, DSP), or the like.

The memory 204 may include a volatile memory (volatile memory), for example, a random access memory (random access memory, RAM). The memory 204 may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The memory 204 may be configured to store software code related to a data processing method. The processor 202 may perform steps of a data processing method of a chip, or may schedule another unit to implement a corresponding function.

It should be understood that the terminal 100 and the server 200 may be central or distributed devices. A processor (for example, the processor 170 and the processor 202) in the terminal 100 and the server 200 may be a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the processor may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

It should be understood that steps related to a model inference process in embodiments of this application relate to an AI-related operation. When the AI operation is performed, an instruction execution architecture of the terminal device and the server is not limited to the foregoing architecture in which the processor and the memory are combined. A system architecture provided in embodiments of this application is described below in detail with reference to FIG. 3.

FIG. 3 is a diagram of a system architecture according to an embodiment of this application. As shown in FIG. 3, the system architecture 500 includes an execution device 510, a training device 520, a database 530, a client device 540, a data storage system 550, and a data collection system 560.

The execution device 510 includes a computing module 511, an I/O interface 512, a preprocessing module 513, and a preprocessing module 514. The computing module 511 may include a target model/rule 501. The preprocessing module 513 and the preprocessing module 514 are optional.

The execution device 510 may be the foregoing terminal device or server that runs the image processing application.

The data collection device 560 is configured to collect a training sample. The training sample may be a plurality of images or the like. After collecting the training sample, the data collection device 560 stores the training sample in the database 530.

The training device 520 may train a to-be-trained neural network based on the training sample maintained in the database 530, to obtain the target model/rule 501.

It should be understood that the training device 520 may perform a pre-training process on the to-be-trained neural network based on the training sample maintained in the database 530, or perform fine-tuning on a model based on pre-training.

It should be noted that, during actual application, the training sample maintained in the database 530 is not necessarily collected by the data collection device 560, and may alternatively be received from another device. In addition, it should be noted that the training device 520 does not necessarily obtain the target model/rule 501 through training completely based on the training sample maintained in the database 530, and may alternatively perform model training by obtaining a training sample from a cloud or another position. The foregoing descriptions should not be construed as a limitation on embodiments of this application.

The target model/rule 501 obtained through training by the training device 520 may be applied to different systems or devices, for example, applied to the execution device 510 shown in FIG. 3. The execution device 510 may be a terminal, for example, a mobile phone terminal, a tablet computer, a notebook computer, an augmented reality (augmented reality, AR)/virtual reality (virtual reality, VR) device, or a vehicle-mounted terminal; or may be a server or the like.

Specifically, the training device 520 may transfer a trained model to the execution device 510.

In FIG. 3, the execution device 510 is provided with the input/output (input/output, I/O) interface 512, configured to exchange data with an external device. A user may input data (for example, an image in embodiments of this application) to the I/O interface 512 by using the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the computing module 511 may be directly used to process the input data.

When the execution device 510 preprocesses the input data, or when the computing module 511 in the execution device 510 performs a related processing process such as computing, the execution device 510 may invoke data, code, or the like in the data storage system 550 for corresponding processing, or may store data, instructions, or the like obtained through corresponding processing in the data storage system 550.

Finally, the I/O interface 512 provides a processing result for the client device 540, to provide the processing result for the user.

In the case shown in FIG. 3, the user may manually provide the input data, and "manually providing the input data" may be implemented through an operation on an interface provided by the I/O interface 512. In another case, the client device 540 may automatically send the input data to the I/O interface 512. If the client device 540 needs to automatically send the input data, authorization needs to be obtained from the user. In this case, the user may set a corresponding permission on the client device 540. The user may view, on the client device 540, a result output by the execution device 510. The result may be specifically presented in a manner of displaying, sound, an action, or the like. The client device 540 may alternatively serve as a data collection terminal, to collect the input data input to the I/O interface 512 and the output result output by the I/O interface 512 that are shown in the figure, and store the input data and the output result in the database 530 as new sample data. Certainly, the client device 540 may alternatively not perform collection, and the I/O interface 512 directly stores, in the database 530 as new sample data, the input data input to the I/O interface 512 and the output result output by the I/O interface 512 that are shown in the figure.

It should be noted that FIG. 3 is merely a diagram of a system architecture according to an embodiment of this application. A positional relationship between devices, components, modules, and the like shown in the figure does not constitute any limitation. For example, in FIG. 3, the data storage system 550 is an external memory relative to the execution device 510. In another case, the data storage system 550 may alternatively be deployed in the execution device 510. It should be understood that the execution device 510 may be deployed in the client device 540.

Details from a perspective of model inference are as follows:

In embodiments of this application, the computing module 511 in the execution device 510 may obtain the code stored in the data storage system 550, to implement steps related to a model inference process in embodiments of this application.

In embodiments of this application, the computing module 511 in the execution device 510 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

Specifically, the computing module 511 in the execution device 510 may be a hardware system with an instruction execution function. The steps related to the model inference process provided in embodiments of this application may be software code stored in a memory. The computing module 511 in the execution device 510 may obtain the software code from the memory, and execute the obtained software code to implement the steps related to the model inference process provided in embodiments of this application.

It should be understood that the computing module 511 in the execution device 510 may be a combination of a hardware system without an instruction execution function and a hardware system with an instruction execution function. Some of the steps related to the model inference process provided in embodiments of this application may be implemented by the hardware system without an instruction execution function in the computing module 511 in the execution device 510.

This is not limited herein.

Details from a perspective of model training are as follows:

In embodiments of this application, the training device 520 may obtain code stored in a memory (which is not shown in FIG. 3, and may be integrated into the training device 520 or deployed separately from the training device 520), to implement steps related to model training in embodiments of this application.

In embodiments of this application, the training device 520 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

It should be understood that the training device 520 may be a combination of a hardware system without an instruction execution function and a hardware system with an instruction execution function. Some of the steps related to model training provided in embodiments of this application may be implemented by the hardware system without an instruction execution function in the training device 520. This is not limited herein.

2. Image processing cloud service provided by a server:

In a possible implementation, the server may provide an image processing service for a terminal side through an application programming interface (application programming interface, API).

A terminal device may send a related parameter (for example, an image) to the server through an API provided by a cloud. The server may obtain a processing result or the like based on the received parameter, and return the processing result to the terminal.

For descriptions of the terminal and the server, refer to the descriptions in the foregoing embodiments. Details are not described herein again.

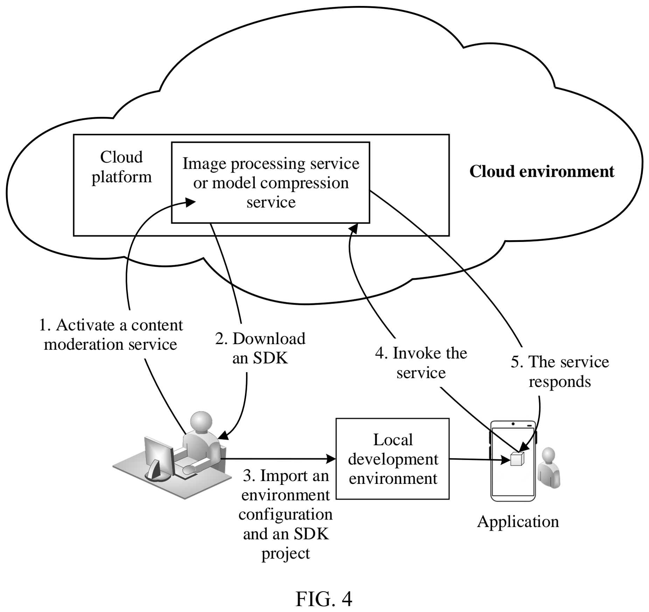

FIG. 4 shows a process of using an image processing cloud service provided by a cloud platform.

1. Activate and purchase a content moderation service.

2. A user may download a software development kit (software development kit, SDK) corresponding to the content moderation service. Usually, the cloud platform provides SDKs of a plurality of development versions for the user to select according to a requirement of a development environment, for example, a Java-version SDK, a Python-version SDK, a PHP-version SDK, and an Android-version SDK.

3. The user downloads an SDK of a corresponding version locally as needed, imports an SDK project to a local development environment, and configures and debugs the SDK project in the local development environment. The local development environment may be further used for developing other functions, to form an application that integrates image processing capabilities.

4. When an image processing application needs to perform image processing during use, an invocation of an image processing API may be triggered. When an application triggers an image processing function, an API request is initiated to a running instance of an image processing service in a cloud environment. The API request carries an image. The running instance in the cloud environment processes the image to obtain a processing result.

5. The cloud environment returns the processing result to the application, to complete one invocation of a method provided in embodiments of this application.

3. Model compression cloud service provided by a server:

In a possible implementation, the server may provide a model compression service for a terminal side through an application programming interface (application programming interface, API).

A terminal device may send a related parameter (for example, an image or a to-be-compressed neural network) to the server through an API provided by a cloud. The server may obtain a compressed neural network or the like based on the received parameter, and return the compressed neural network to the terminal.

For descriptions of the terminal and the server, refer to the descriptions in the foregoing embodiments. Details are not described herein again.

For example, a data processing method provided in embodiments of this application may be applied to an ADAS/ADS visual perception system.

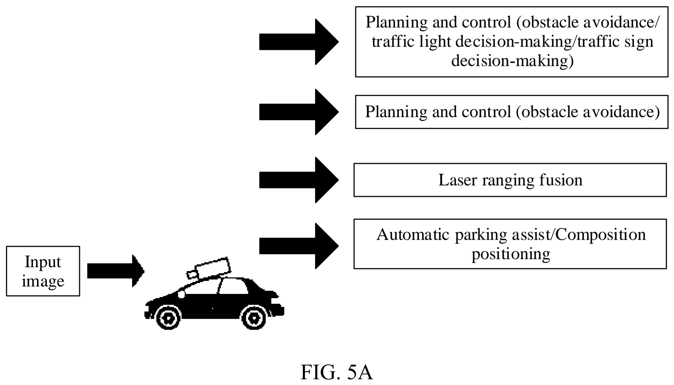

As shown in FIG. 5A, in the ADAS and the ADS, a plurality of types of 2D targets need to be detected in real time, and include a dynamic obstacle (a pedestrian (Pedestrian), a cyclist (Cyclist), a tricycle (Tricycle), a car (Car), a truck (Truck), or a bus (Bus)), a static obstacle (a traffic cone (TrafficCone), a traffic stick (TrafficStick), a fire hydrant (FireHydrant), a motorcycle (Motorcycle), or a bicycle (Bicycle)), or a traffic sign ((TrafficSign), a guide sign (GuideSign), a billboard (Billboard), a red traffic light (TrafficLight_Red)/yellow traffic light (TrafficLight_Yellow)/green traffic light (TrafficLight_Green)/black traffic light (TrafficLight_Black), or a road sign (RoadSign)). In addition, to accurately obtain an area occupied by the dynamic obstacle in 3D space, 3D estimation further needs to be performed on the dynamic obstacle, to output a 3D box. For fusion with data of a lidar, a mask of the dynamic obstacle needs to be obtained, to filter out a laser point cloud on the dynamic obstacle. For accurate positioning of a parking space, four key points of the parking space need to be detected at the same time. For composition positioning, a key point of a static target needs to be detected. All or some of the foregoing functions may be completed in a model obtained through training by using the technical solutions provided in embodiments of this application.

Embodiments of this application relate to massive application of a neural network. Therefore, for ease of understanding, the following first describes related terms and related concepts such as the neural network in embodiments of this application.

(1) Neural network

The neural network may include a neuron. The neuron may be an operation unit that uses $x_s$ (namely, input data) and an intercept of 1 as an input. An output of the operation unit may be as follows:

$$h_{W,b}\left(x\right) = f\left(W^T x\right) = f\left(\sum\nolimits_{s=1}^{n} W_s x_s + b\right)$$

s=1, 2, ..., or n, n is a natural number greater than 1, $W_s$ is a weight of $x_s$, and b is a bias of the neuron. f is an activation function (activation function) of the neuron, and is used to introduce a nonlinear characteristic into the neural network, to convert an input signal in the neuron into an output signal. The output signal of the activation function may serve as an input for a next convolutional layer, and the activation function may be a sigmoid function. The neural network is a network formed by connecting a plurality of individual neurons together. To be specific, an output of a neuron may be an input for another neuron. An input for each neuron may be connected to a local receptive field of a previous layer to extract a feature of the local receptive field. The local receptive field may be an area including several neurons.

(2) A convolutional neural network (convolutional neural network, CNN) is a deep neural network with a convolutional structure. The convolutional neural network includes a feature extractor that includes a convolutional layer and a subsampling layer, and the feature extractor may be considered as a filter. The convolutional layer is a neuron layer that is in the convolutional neural network and at which convolution processing is performed on an input signal. At the convolutional layer of the convolutional neural network, one neuron may be connected only to some neurons at an adjacent layer. One convolutional layer usually includes several feature planes, and each feature plane may include some neurons arranged in a rectangular shape. Neurons on a same feature plane share a weight, and the shared weight herein is a convolution kernel. The weight sharing may be understood as that a feature extraction manner is irrelevant to a position. The convolution kernel may be initialized in a form of a matrix of a random size. During training of the convolutional neural network, an appropriate weight may be obtained for the convolution kernel through learning. In addition, direct benefits of the weight sharing are that connections between layers of the convolutional neural network are reduced, and an overfitting risk is also reduced.

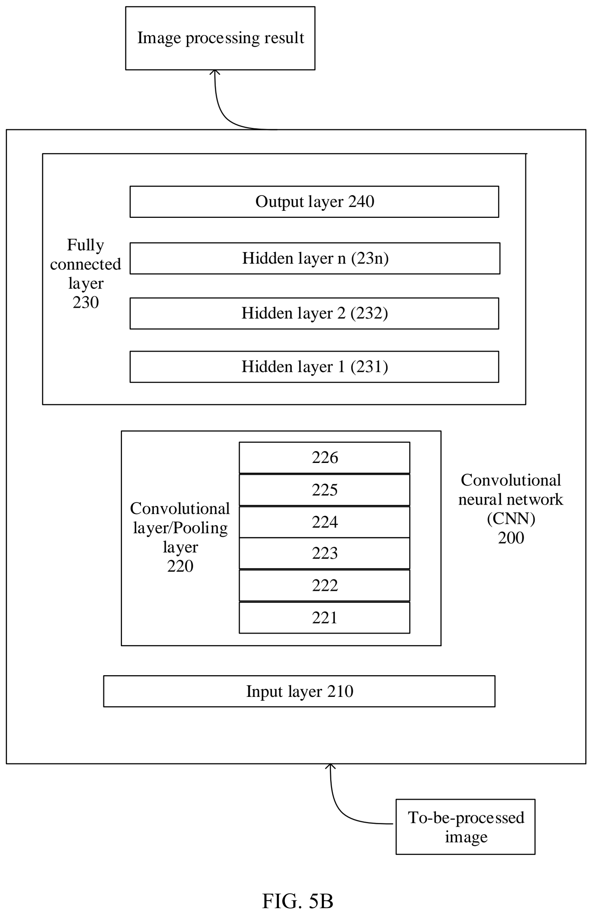

The CNN is a very common neural network. A structure of the CNN is described below in detail with reference to FIG. 5B. As described in the foregoing basic concepts, the convolutional neural network is a deep neural network with a convolutional structure, and is a deep learning (deep learning) architecture. In the deep learning architecture, multi-layer learning is performed at different abstraction levels through a machine learning algorithm. As a deep learning architecture, the CNN is a feed-forward (feed-forward) artificial neural network. Neurons in the feed-forward artificial neural network may respond to an image input to the feed-forward artificial neural network.

As shown in FIG. 5B, a convolutional neural network (CNN) 200 may include an input layer 210, a convolutional layer/pooling layer 220 (where the pooling layer is optional), and a fully connected layer (fully connected layer) 230.

Convolutional layer/Pooling layer 220:

Convolutional layer:

As shown in FIG. 5B, for example, the convolutional layer/pooling layer 220 may include layers 221 to 226. For example, in an implementation, the layer 221 is a convolutional layer, the layer 222 is a pooling layer, the layer 223 is a convolutional layer, the layer 224 is a pooling layer, 225 is a convolutional layer, and 226 is a pooling layer. In another implementation, 221 and 222 are convolutional layers, 223 is a pooling layer, 224 and 225 are convolutional layers, and 226 is a pooling layer. To be specific, an output of a convolutional layer may be used as an input for a subsequent pooling layer, or may be used as an input for another convolutional layer to continue to perform a convolution operation.

The following describes an internal operation principle of one convolutional layer by using the convolutional layer 221 as an example.

The convolutional layer 221 may include a plurality of convolution operators. The convolution operator is also referred to as a kernel. In image processing, the convolution operator is equivalent to a filter for extracting specific information from an input image matrix. The convolution operator may be essentially a weight matrix, and the weight matrix is usually predefined. During a convolution operation on an image, the weight matrix usually processes pixels on an input image along a horizontal direction at a granularity of one pixel (or two pixels or the like, depending on a value of a stride (stride)), to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, no single weight matrix is used, but a plurality of weight matrices with a same size (rows×columns), namely, a plurality of matrices of a same type, are used. Outputs of all of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and still another weight matrix is used to blur unnecessary noise in the image. The plurality of weight matrices have a same size (rows×columns). Feature maps extracted from the plurality of weight matrices with the same size also have a same size. Then the plurality of extracted feature maps with the same size are combined into an output of the convolution operation.

Weight values in these weight matrices need to be obtained through massive training during actual application. Each weight matrix including weight values obtained through training may be used to extract information from the input image, to enable the convolutional neural network 200 to perform correct prediction.

When the convolutional neural network 200 has a plurality of convolutional layers, a larger quantity of general features are usually extracted at an initial convolutional layer (for example, 221). The general features may also be referred to as low-level features. With an increase in a depth of the convolutional neural network 200, a feature extracted at a later convolutional layer (for example, 226) is more complex, for example, is a high-level semantic feature. A feature with higher-level semantics is more suitable for a to-be-resolved problem.

Pooling layer:

A quantity of training parameters usually needs to be reduced. Therefore, a pooling layer usually needs to be periodically introduced after a convolutional layer. For example, for the layers 221 to 226 in 220 shown in FIG. 5B, one convolutional layer may be followed by one pooling layer, or a plurality of convolutional layers may be followed by one or more pooling layers. During image processing, the pooling layer is only used to reduce a spatial size of the image. The pooling layer may include an average pooling operator and/or a max pooling operator, to perform sampling on the input image to obtain an image with a small size. The average pooling operator may be used to perform calculation on pixel values in the image within a specific range to generate an average value as a result of average pooling. The max pooling operator may be used to select a pixel with a largest value within a specific range as a max pooling result. In addition, similar to that the size of the weight matrix at the convolutional layer should be related to the size of the image, an operator at the pooling layer should also be related to the size of the image. A size of a processed image output by the pooling layer may be less than a size of an image input to the pooling layer. Each pixel in the image output by the pooling layer indicates an average value or a maximum value of a corresponding sub-area of the image input to the pooling layer.

Fully connected layer 230:

After processing is performed at the convolutional layer/pooling layer 220, the convolutional neural network 200 is not ready to output needed output information. A reason is as follows: As described above, at the convolutional layer/pooling layer 220, only a feature is extracted, and a quantity of parameters resulting from the input image is reduced. However, to generate final output information (needed class information or other related information), the convolutional neural network 200 needs to generate, through the fully connected layer 230, an output of one needed class or outputs of a group of needed classes. Therefore, the fully connected layer 230 may include a plurality of hidden layers (231, 232, ..., and 23n shown in FIG. 5B). Parameters included in the plurality of hidden layers may be obtained through pre-training based on related training data of a specific task type. For example, the task type may include image recognition, image classification, or super-resolution image reconstruction.

The plurality of hidden layers in the fully connected layer 230 are followed by the output layer 240, to be specific, the last layer of the entire convolutional neural network 200. The output layer 240 has a loss function similar to a categorical cross-entropy, and the loss function is specifically used to calculate a prediction error. When forward propagation (for example, propagation in a direction from 210 to 240 in FIG. 5B is forward propagation) of the entire convolutional neural network 200 is completed, back propagation (for example, propagation in a direction from 240 to 210 in FIG. 5B is back propagation) is started to update weight values and deviations of the layers mentioned above, to reduce a loss of the convolutional neural network 200 and an error between a result output by the convolutional neural network 200 through the output layer and an ideal result.

It should be noted that the convolutional neural network 200 shown in FIG. 5B is merely an example convolutional neural network. During specific application, a convolutional neural network may alternatively be in a form of another network model, for example, include only a part of the network structure shown in FIG. 5B. For example, a convolutional neural network used in embodiments of this application may include only an input layer 210, a convolutional layer/pooling layer 220, and an output layer 240.

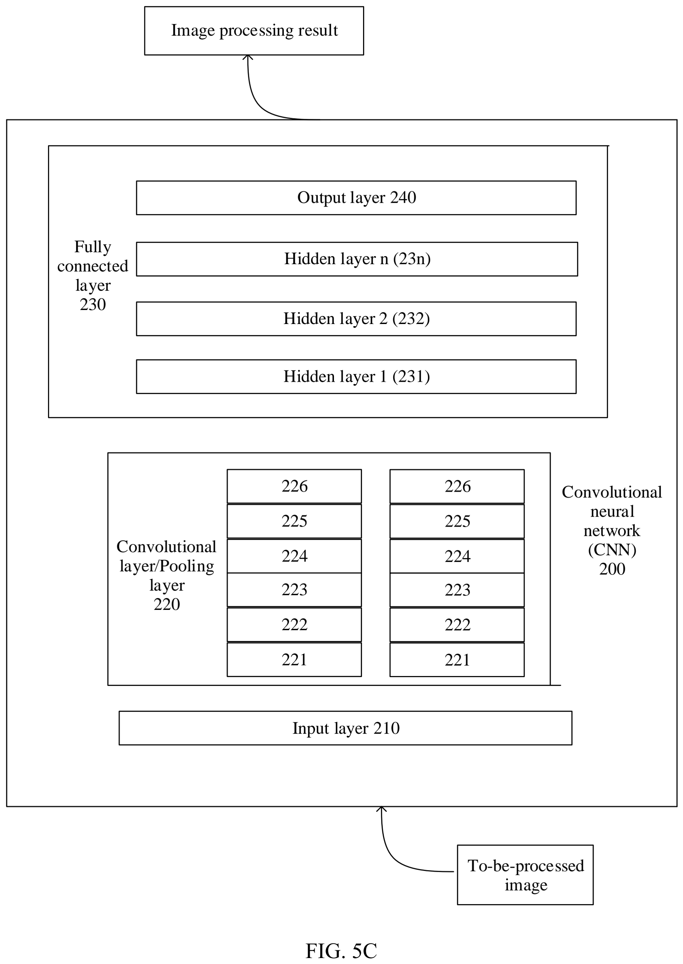

It should be noted that the convolutional neural network 100 shown in FIG. 5B is merely an example convolutional neural network. During specific application, a convolutional neural network may alternatively be in a form of another network model. For example, as shown in FIG. 5C, a plurality of convolutional layers/pooling layers input, in parallel, extracted features to a fully connected layer 230 for processing.

(3) Deep neural network

The deep neural network (Deep Neural Network, DNN), also referred to as a multi-layer neural network, may be understood as a neural network including many hidden layers. There is no special metric criterion for the "many" herein. The DNN is divided based on positions of different layers, and a neural network in the DNN may be divided into three types: an input layer, a hidden layer, and an output layer. Usually, the $1^{st}$ layer is the input layer, the last layer is the output layer, and all intermediate layers are hidden layers. Layers are fully connected. To be specific, any neuron at an $i^{th}$ layer is necessarily connected to any neuron at an $(i+1)^{th}$ layer. Although the DNN seems complex, an operation at each layer is not complex, and is simply expressed by the following linear relationship expression: $\vec{y} = \alpha(W\vec{x} + \vec{b})$, where $\vec{x}$ is an input vector, $\vec{y}$ is an output vector, $b$ is an offset vector, $W$ is a weight matrix (also referred to as a coefficient), and $\alpha(\ )$ is an activation function. At each layer, the output vector $\vec{y}$ is obtained merely by performing such a simple operation on the input vector $\vec{x}$. Because the DNN includes many layers, there are also a large quantity of coefficients $W$ and offset vectors $\vec{b}$. These parameters in the DNN are defined as follows: The coefficient $W$ is used as an example. It is assumed that, in a three-layer DNN, a linear coefficient from the $4^{th}$ neuron at the $2^{nd}$ layer to the $2^{nd}$ neuron at the $3^{rd}$ layer is defined as $W_{24}^{3}$. The superscript 3 indicates a layer at which the coefficient $W$ is located, and the subscript corresponds to an output third-layer index 2 and an input second-layer index 4. To sum up, a coefficient from a $k^{th}$ neuron at an $(L-1)^{th}$ layer to a $j^{th}$ neuron at an $L^{th}$ layer is defined as $W_{jk}^{L}$. It should be noted that the input layer does not have the $W$ parameter. In the deep neural network, a larger quantity of hidden layers enables the network to better describe a complex case in the real world. Theoretically, a model with more parameters has higher complexity and a larger "capacity". This means that the model can perform a more complex learning task. Training for the deep neural network is a process of learning a weight matrix, and a final objective of the training is to obtain a weight matrix (a weight matrix including vectors $W$ of many layers) for all layers of a trained deep neural network.

(4) Loss function

During training for a deep neural network, because an output of the deep neural network is expected to be close, as much as possible, to a predicted value that is actually expected, a predicted value of a current network may be compared with a target value that is actually expected, and then a weight vector of each layer of the neural network is updated based on a difference between the predicted value and the target value (certainly, before the $1^{st}$ update, an initialization process is usually performed, to be specific, parameters are preconfigured for all layers of the deep neural network). For example, if the predicted value of the network is large, the weight vector is adjusted to decrease the predicted value, and adjustment is continuously performed until the deep neural network can obtain, through prediction, the target value that is actually expected or a value that is quite close to the target value that is actually expected. Therefore, "how to obtain, through comparison, a difference between a predicted value and a target value" needs to be predefined. This is a loss function (loss function) or an objective function (objective function). The loss function and the objective function are important equations for measuring a difference between a predicted value and a target value. The loss function is used as an example. A larger output value (loss) of the loss function indicates a greater difference. Therefore, the training for the deep neural network is a process of minimizing the loss.

(5) Back propagation algorithm

During training, a convolutional neural network may modify a value of a parameter in an initial super-resolution model by using an error back propagation (back propagation, BP) algorithm, so that a reconstruction error loss of the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, for example, a weight matrix, of an optimal super-resolution model.

(6) Model quantification:

The model quantization is a term in the field of artificial intelligence model acceleration, and is a compression technology for representing weight data and feature map data in a neural network by using a bit width less than 32 bits. A smaller bit width of compression indicates a larger reduction in memory space, a delay, and power consumption during actual deployment. The model quantization is usually classified into two types: post-training quantization (PTQ) and quantization-aware training (QAT). In the post-training quantization, a process of quantizing a pre-trained floating-point model can be completed with only a small quantity of unlabeled calibration datasets. The post-training quantization is usually used for compression with a large bit width. In the quantization-aware training, a complete dataset is needed for training, and a quantization operation is simulated during training, to enable a quantized model to be further converged to an optimal point. The quantization-aware training is usually used in a precision recovery process after a large loss occurs in the quantized model.

(7) Full precision: a parameter with a value of a 32-bit floating-point number type in a network model.

(8) Anchor: An anchor box that commonly appears during object detection is an anchor box (which may also be referred to as a bounding box), and represents a fixed reference box. A group of fixed reference boxes with different scales and different positions is preset, and covers almost all positions and scales. Each reference box is responsible for detecting a target that has an intersection over union greater than a threshold (a preset training value, which is usually 0.5 or 0.7) with the reference box.

(9) Knowledge distillation: In the knowledge distillation (KD) method, knowledge learned by a foundation model may be used to guide training on a small model, so that the small model has performance equivalent to performance of the foundation model, but a quantity of parameters is greatly reduced, to implement model compression and acceleration. This is application of the knowledge distillation and transfer learning in model optimization.

(10) Teacher model: a trained full-precision foundation model.

(11) Student model: The student model may be a model obtained through pruning, quantization, or the like of a teacher model, or may be a manually designed model that has a same framework as a framework of a teacher model.

(12) Transformer layer

A neural network includes an embedding layer and at least one transformer layer. The at least one transformer layer may be N transformer layers (N is an integer greater than 0). Each transformer layer includes an attention layer, an addition and normalization (add & norm) layer, a feedforward (feedforward) layer, and an addition and normalization layer that are adjacent in sequence. At the embedding layer, a current input is embedded to obtain a plurality of embedding vectors. At the attention layer, P input vectors are obtained from a previous layer of a first transformer layer. Any first input vector among the P input vectors is used as a center, and an intermediate vector corresponding to the first input vector is obtained based on a correlation between the first input vector and each input vector within a preset attention window range. In this way, P intermediate vectors corresponding to the P input vectors are determined. At a pooling layer, the P intermediate vectors are combined into Q output vectors. A plurality of output vectors obtained at the last transformer layer among the transformer layers are used as a feature representation of the current input.

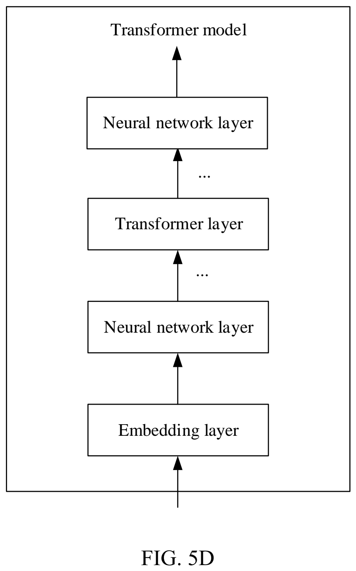

FIG. 5D is a diagram of a structure of a transformer model. It should be understood that the structure in FIG. 5D is merely an example, and a quantity of neural network layers may be set according to a requirement. At an embedding layer, an input may be embedded to obtain a plurality of eigenvectors. A core characteristic of the transformer model lies in a unique attention mechanism used by the transformer model. During processing of a natural language, for example, a sentence, the transformer model assigns different attention coefficients to word vectors in the sentence by using the attention mechanism, so that impact of context on words in the sentence is considered more comprehensively. At the embedding layer, N embedding vectors $X_1$ are obtained based on a node feature and positional encoding of each node in a current sequence. An attention layer is connected to the embedding layer. The N embedding vectors are obtained from the embedding layer as input vectors. Based on a correlation between input vectors among the N input vectors, the input vectors are synthesized to obtain N output vectors. The N output vectors are output to a following transformer layer. At the transformer layer, an output of a previous layer is obtained as an input vector, and an operation similar to that at a previous-level transformer layer is performed.

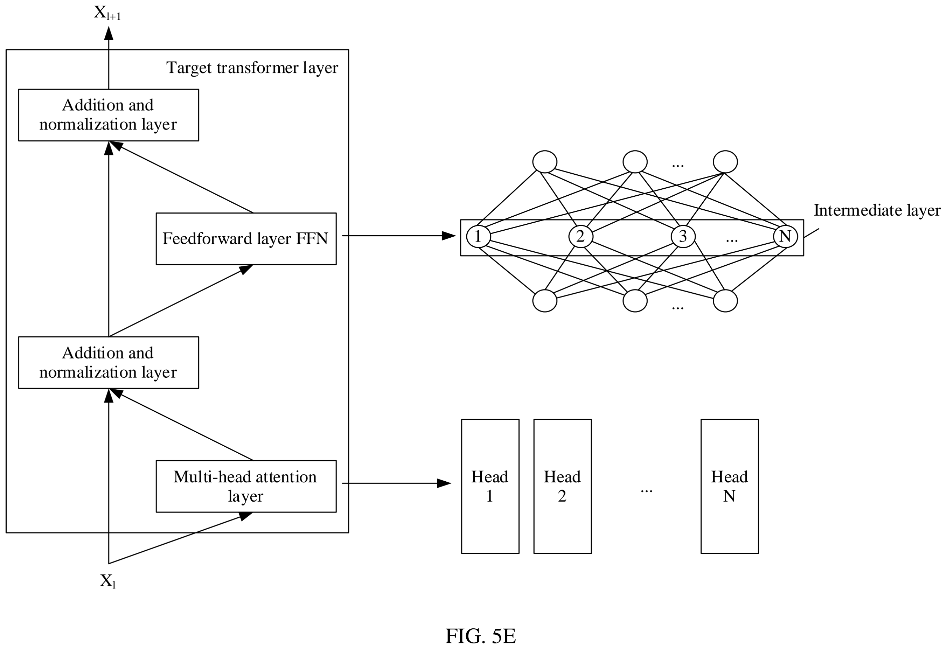

FIG. 5E is a diagram of a structure of a transformer layer. The transformer layer may include a multi-head attention layer (or referred to as an attention layer), an addition and normalization (add & norm) layer, a feedforward layer (feedforward net, FFN), and an addition and normalization layer that are adjacent in sequence.

The multi-head attention layer obtains N input vectors $X_1$ from a previous layer of the multi-head attention layer, where the N input vectors $X_1$ may also be represented by a matrix X. The multi-head attention layer transforms the vectors based on a correlation between the vectors by using a self-attention mechanism, to obtain N output vectors, where the N output vectors may also be represented by a matrix Y. It can be understood that, when the multi-head attention layer is a layer directly connected to an embedding layer, for example, a transformer layer directly connected to an embedding layer in FIG. 5E, the input vectors obtained by the multi-head attention layer are embedding vectors output by the embedding layer; or when the multi-head attention layer is a multi-head attention layer included in a following transformer layer, for example, a multi-head attention layer included in a transformer layer directly connected to a previous-level transformer layer in FIG. 5E, the input vectors obtained by the multi-head attention layer are output vectors of the previous-level transformer layer. The multi-head attention layer may include a plurality of attention heads (head) (for example, a head 1, a head 2, ..., and a head N shown in FIG. 5E).

(13) Attention mechanism (attention mechanism)

The attention mechanism simulates an internal process of an observational behavior of a creature, is a mechanism that aligns internal experience with external feelings to increase observation precision of some areas, and can quickly select high-value information from a large amount of information by using limited attention resources. The attention mechanism can quickly extract an important feature of sparse data, and therefore is widely used in natural language processing tasks, especially in machine translation. A self-attention mechanism (self-attention mechanism) is obtained by improving the attention mechanism. The self-attention mechanism is less dependent on external information and is better at capturing an internal correlation of data or features. An essential idea of the attention mechanism may be rewritten as the following formula:

Lx=‖Source‖ represents a length of a source. The formula means that constituent elements in the source are assumed to include a series of data pairs. In this case, an element query in a target (Target) is provided, a similarity or a correlation between the query and each key is calculated to obtain a weight coefficient of a value corresponding to each key, and then weighted summation is performed on values to obtain a final attention value. Therefore, the attention mechanism is essentially to perform weighted summation on values of the elements in the source, and a query and a key are used to calculate a weight coefficient of a corresponding value. Conceptually, attention may be understood as selecting a small amount of important information from a large amount of information, focusing on the important information, and ignoring most of unimportant information. A process of focusing occurs during calculation of the weight coefficient. A larger weight indicates that a value corresponding to the weight is more focused. To be specific, the weight indicates importance of information, and the value is the information corresponding to the weight. The self-attention mechanism may be understood as intra-attention (intra-attention). The attention mechanism occurs between the element query in the target and all of the elements in the source. The self-attention mechanism is an attention mechanism that occurs between elements in the source or between elements in the target, and may also be understood as an attention calculation mechanism in a special case of Target=Source. A specific calculation process of the self-attention mechanism is the same except that a calculation object changes.

Object detection is intended to locate and classify a visual object in an input image. During early operation, this task is usually implemented by processing a regional feature of the input image based on a convolutional neural network. Recently, a transformer-based object detector has been proposed, where object detection is considered as a set prediction task and may be trained end to end. This greatly simplifies an object detection task, and a user does not need to perform tedious adjustment on a manually designed component, for example, a size or a proportion of an anchor. Despite an excellent capability, the object detector usually has a large quantity of parameters and floating-point operations (FLOPs). For example, in an object detector (DETR-R50) with a ResNet-50 as a backbone network, 39.8M parameters occupy a memory of 159 MB and consume a computing amount of 86G FLOPs. A large amount of memory and computing power is needed during inference. This limits deployment of a model on a platform with limited resources.

To implement efficient online inference, many operations have been performed to compress and accelerate a neural network, including compact network design, network pruning, lower-order decomposition, quantization, knowledge distillation, and the like. Quantization and pruning are especially suitable for deployment on an AI chip, to reduce a quantity of network parameters and activation values, and implement efficient inference. However, parameters of a quantized model greatly change compared with parameters of an unquantized model, leading to a decrease in model precision. Especially when quantization is performed to retain an ultra-small quantity of bits (4 bits or fewer), performance is sharply degraded.

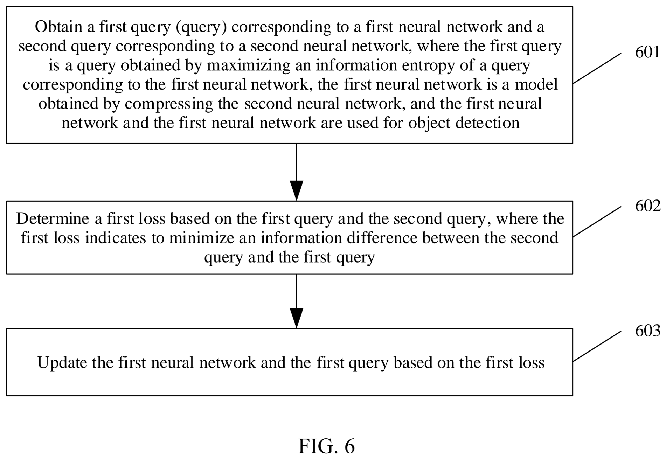

To resolve the foregoing problems, refer to FIG. 6. FIG. 6 is a schematic flowchart of a data processing method according to an embodiment of this application. As shown in FIG. 6, the data processing method provided in this embodiment of this application may include steps 601 to 603. The following separately describes these steps in detail.

601: Obtain a first query (query) corresponding to a first neural network and a second query corresponding to a second neural network, where the first query is a query obtained by maximizing an information entropy of a query corresponding to the first neural network, the first neural network is a model obtained by compressing the second neural network, and the first neural network and the first neural network are used for object detection.

In a possible implementation, a neural network model used for object detection may include a feature extraction network (for example, including a backbone network and an encoder) and a decoder. A feature representation (obtained by the feature extraction network by processing an image) and a plurality of query vectors may be input to the decoder, to obtain at least one image detection result (including one bounding box and a corresponding category). One query vector may correspond to one image detection result.

In this embodiment of this application, a to-be-compressed neural network (the second neural network) and a neural network (the first neural network) obtained by compressing the second neural network may be obtained. In this application, the second neural network may serve as a teacher network, the first neural network may serve as a student model, and the first neural network and a plurality of corresponding query vectors are updated through knowledge distillation, to improve model precision of the first neural network.

In a possible implementation, the first neural network is obtained by performing 2-bit, 3-bit, or 4-bit quantization on the second neural network.

In a possible implementation, when knowledge distillation is performed on the first neural network, a trade-off between performance and compression may be achieved by minimizing inputs included in intermediate layers of the teacher network and the student model and maximizing mutual information of an expected output. For example, $\mathcal{T}$ and $\mathcal{S}$ represent the second neural network and the first neural network respectively.

For example, a loss of knowledge distillation may be constructed as follows:

$$\min_{\theta^{\mathcal{S}}} I\left(X; E^{S}\right) - \beta I(E^{S}, q^{S}; y^{GT}) - \gamma I(q^{S}; q^{\mathcal{T}})$$

$q^{\mathcal{T}}$ and $q^S$ indicate a query of the teacher model and a query of the student model respectively. $\beta$ and $\gamma$ are Lagrange multipliers. $\theta^{\mathcal{S}}$ is a parameter of the student model. $I(\cdot)$ returns mutual information of two input variables. The first term $I(X; E^S)$ is minimized to indicate mutual information between an input and a visual feature $E^S$, to extract a task-oriented prompt. The second term $I(E^S, q^S; y^{GT})$ is maximized to indicate mutual information between an extracted visual feature and a real data label, to facilitate object detection. The two terms may be implemented through common network training and a detection loss constraint, for example, coordinate regression and categorical classification.

The third term $I(q^S; q^{\mathcal{T}})$ attempts to resolve an information distortion problem of the query of the student model by introducing the query of the teacher model as priori knowledge. To achieve this objective, the third-term formula may be mathematically expanded and re-expressed as the following formula:

$$I(q^{S}; q^{\mathcal{T}}) = H(q^{S}) - H(q^{S} \mid q^{\mathcal{T}})$$

H indicates an information entropy. Self-information $H(q^S)$ needs to be maximized, and a conditional entropy $H(q^S \mid q^{\mathcal{T}})$ needs to be minimized. It is difficult to maximize and minimize the two terms at the same time. Therefore, the foregoing formula may be re-expressed as a bilevel optimization problem, and the problem is solved by alternately optimizing the two terms. This may be defined as the following formula:

$$\min_{\theta} H\left(q^{S^{*}} \mid q^{\mathcal{T}}\right)$$

$$\text{s.t. } \&q^{S^{*}} = \arg\max H(q^{S})$$

The objective relates to two sub-problems: obtaining a current optimal query $q^{S^*}$ through lower-level (inner-level) optimization, and implementing knowledge transfer from the teacher model to the student model through upper-level (upper-level) optimization. The optimization of the foregoing two problems may be implemented in a forward propagation process and a back propagation process respectively.

In a possible implementation, the query of the student model may be optimized during forward propagation, and a distribution of the query of the student model is adjusted to a distribution of a preset type. In this embodiment of this application, the obtained first query (namely, the query of the student model) is obtained by adjusting, to a distribution of a preset type, a distribution of the query corresponding to the first neural network. The distribution of the preset type herein may be a distribution (or an approximate distribution) of the query corresponding to the teacher model. For example, the distribution of the preset type may be a Gaussian distribution.

The foregoing optimization of the query corresponding to the student model may be referred to as lower-level optimization (inner-level optimization). The following provides a specific example of lower-level optimization.

Based on a definition of self-information, $H(q^S)$ may be expanded as follows:

$$H(q^S) = -\int_{q_i^S \in q^S} p\left(q_i^S\right) \log p\left(q_i^S\right)$$

The distribution of the query of the teacher model tends to conform to the Gaussian distribution. Therefore, the lower-level optimization problem may be resolved through distribution alignment. Therefore, an average value $\mu(q^S)$ and a variance $\sigma(q^S)$ of the query $q^S$ may be calculated, and a distribution of the query is $q^S \sim \mathcal{N}\ (\mu(q^S), \sigma(q^S))$. Then the self-information of the query of the student model may be written as the following formula:

$$H(q^S) = -E\left[\log \mathcal{N}\left(\mu(q^S), \sigma(q^S)\right)\right]$$
$$= -E\left[\log\left[(2\pi\sigma(q^S)^2)^{\frac{1}{2}} \exp\left(-\frac{\left(q_i^S - \mu(q^S)\right)^2}{2\sigma(q^S)^2}\right)\right]\right]$$
$$= \frac{1}{2}\log 2\,\pi\sigma(q^S)^2$$

When $q^{S^*} = [q^S - \mu(q^S)]/\left[\sqrt{\sigma(q^S)^2 + \epsilon_q}\right]$, the objective $H(q^{S^*})$ reaches its maximum value: $H(q^{S^*}) = (1/2) \log 2\,\pi e[\sigma(q^S)^2 + \epsilon_{qs}]$. In addition, due to a deviation of query data of the student model, the average value and the variance of the query may be inaccurate. To resolve this problem, a learnable shift parameter $\beta_{q_s}$ and a learnable scale parameter $\gamma_{q_s}$ may be added by using a concept in batch normalization (Batch Normalization), to scale and translate the query. The query of the student model may be optimized in the following manner:

$$q^{S^*} = \frac{q^S - \mu(q^S)}{\sqrt{\sigma(q^S)^2 + \epsilon_q s}}\gamma_q s + \beta_q s$$

In this case, maximum self-information of the query of the student model is as follows: $H\left(q^{S^*}\right) = (1/2) \log 2\,\pi e\left[\left(\sigma_q^2 s + \epsilon_q s\right)/\gamma_q^2 s\right]$. Therefore, during forward propagation, an optimized query $q^{S^*}$ may be obtained through the foregoing formula, and then upper-level optimization is further performed (to be specific, knowledge transfer from the teacher model to the student model is completed).

In a possible implementation, the first neural network includes a first backbone network, a first encoder, and a first decoder. During forward propagation, a first intermediate output may be obtained based on a target image by using the first backbone network and the first encoder, and the first query and the first intermediate output are processed by using the first decoder. A first processing result may include a bounding box and a category corresponding to image content in the bounding box.

To minimize a conditional entropy, one-to-one matching needs to be performed between a detection result of the student model and a detection result of the teacher model. To be specific, all of bounding boxes output by the student model need to be in a one-to-one correspondence with bounding boxes output by the teacher model. During determining of a correspondence between the detection result of the student model and the detection result of the teacher model, a correspondence between the detection result of the student model and a ground-truth of an image detection result may be first determined.

Due to discreteness of algorithm matching and randomness of model training, ground-truth (ground-truth) matching (to be specific, matching between an output of the student model and a ground-truth of an image detection result of an image) becomes a dynamic and unstable process. For example, the ground-truth of the image detection result includes five bounding boxes, and the detection result of the student model includes eight bounding boxes. Embodiments of this application provide foreground-aware query matching to resolve this problem. Specifically, matching is performed between the ground-truth of the image detection result and the detection result output by the student model, a bounding box (for example, a bounding box whose positional relationship meets a preset condition) that can match the ground-truth of the image detection result is determined from the detection result output by the student model, and a one-to-one correspondence is established between the determined bounding box and the ground-truth of the image detection result. That is, a bounding box with a more accurate foreground awareness capability among bounding boxes output by the student model is selected.

For example, a maximum overlap ratio is as follows:

$$G_i = \max_{1 \leq j \leq N} \text{GIoU}\left(b_i^{GT}, b_j^{\mathcal{S}}\right)$$

GIoU$(\cdot)$ is a generalized intersection over union. Each $G_i$ indicates a degree of overlapping between a bounding box (bounding box) predicted by the student model and a bounding box (bounding box) of an $i^{th}$ detection result ground-truth. Then a high-quality student bounding box is retained:

$$b_j^{\mathcal{S}} = \begin{cases} b_j^{\mathcal{S}}, \text{GIoU}\left(b_i^{GT}, b_j^{\mathcal{S}}\right) > \tau G_i, \forall i \\ \emptyset, \qquad \text{otherwise} \end{cases}$$

T is a threshold for controlling a proportion of a distillation query. After an empty query is removed, a bounding box information set of the student model may be obtained:

$$\tilde{y}^{\mathcal{S}} = \left\{\tilde{c}_j^{\mathcal{S}}, \tilde{b}_j^{\mathcal{S}}\right\}_{j=1}^{\tilde{N}}.$$

In a possible implementation, object detection may be performed on the target image based on the first query and the first neural network, to obtain information about the M first bounding boxes. A correspondence may be established between only a part of bounding boxes in the information about the M first bounding boxes and bounding boxes included in a detection result ground-truth. Specifically, a detection result ground-truth corresponding to the target image may be obtained, where the detection result ground-truth includes a plurality of second bounding boxes; and M1 first bounding boxes are determined from the M first bounding boxes based on a positional relationship between the first bounding box and the second bounding box, where each of the M1 first bounding boxes corresponds to one second bounding box, a positional relationship between each of the M1 first bounding boxes and a corresponding second bounding box meets a first preset condition, and the first preset condition is related to a degree of overlapping between areas in which bounding boxes are located (for example, the first preset condition is that the degree of overlapping is greater than a threshold).

In a possible implementation, the first query is a query corresponding to the M1 first bounding boxes.

In a possible implementation, the second neural network includes a second backbone network, a second encoder, and a second decoder. A second intermediate output may be obtained based on the target image by using the second backbone network and the second encoder, and the second query and the second intermediate output are processed by using the second decoder. One-to-one matching may be performed between a bounding box output by the teacher model and a bounding box that is output by each student model and that has established a matching relationship with the ground-truth. An output, obtained through matching, of the teacher model may be a second processing result.

In a possible implementation, a positional relationship between each bounding box output by the teacher model and a bounding box (a bounding box that has established a matching relationship with the ground-truth) output by each student model may be determined, and an association relationship is established between bounding boxes whose positional relationship meets a preset condition.

In a possible implementation, object detection may be performed on the target image based on the second query and the second neural network, to obtain information about N third bounding boxes; and M1 third bounding boxes are determined from the N third bounding boxes based on a positional relationship between each of the M1 first bounding boxes and the third bounding box, where each of the M1 first bounding boxes corresponds to one second bounding box, a positional relationship between each of the M1 first bounding boxes and a corresponding third bounding box meets a second preset condition, and the second preset condition is related to a degree of overlapping between areas in which bounding boxes are located (for example, the second preset condition may be that the degree of overlapping is the largest).

In a possible implementation, the obtained second query is a query corresponding to the M1 third bounding boxes.

In the foregoing manner, the correspondence between the detection result output by the student model and the detection result output by the teacher model may be established. Similarly, a correspondence between the query of the student model and the query of the teacher model (to be specific, a one-to-one correspondence between queries in the first query and queries in the second query) may be determined based on the correspondence between the detection results. Then a loss may be constructed based on queries that have a correspondence.

602: Determine a first loss based on the first query and the second query, where the first loss indicates to minimize an information difference between the second query and the first query.

Step 602 may also be referred to as upper-level optimization (upper-level optimization). During upper-level optimization, an information difference between the student model and the teacher model may be minimized. Optionally, the information difference may be represented by a distance function, for example, an L2 norm or a conditional entropy.

For example, $y^{GT} = \{c_i^{GT}, b_i^{GT}\}_{i=1}^{N_{gt}}$ may represent a ground-truth (ground-truth) label, where $N_{gt}$ is a foreground quantity, and $c_i^{GT}$ and $b_i^{GT}$ represent a category and a bounding box (bounding box) of an $i^{th}$ object respectively. For the student model, each query is associated with one object. Therefore, N objects of the teacher model (teacher) and N objects of the student model (student) may be obtained, and are denoted as

$$y^S = \{c_j^S, b_j^S\}_{j=1}^{N}$$

and $y^{\mathcal{T}} = \{c_j^{\mathcal{T}}, b_j^{\mathcal{T}}\}_{j=1}^{N}$ respectively.

For a query of a $j^{th}$ student model, a corresponding query of the teacher model is as follows:

$$\tilde{c}_j^{\mathcal{T}}, \tilde{b}_j^{\mathcal{T}} = \arg\max_{\tilde{c}_k^{\mathcal{T}} \tilde{b}_k^{\mathcal{T}}} \sum_{k=1}^{N} \mu_1 \, \mathrm{GIoU}\left(\tilde{b}_j^{\mathcal{S}}, b_k^{\mathcal{T}}\right) - \mu_2 \left\|\tilde{b}_j^{\mathcal{S}} - b_k^{\mathcal{T}}\right\|_1$$

Due to different network structures, query sequences have different importance and orders. In the foregoing manner, matching is performed based on importance.

Finally, a corrected upper-level optimization problem changes to the following:

$$\min_{\theta} H\left(\tilde{\mathbf{q}}^{\mathcal{S}^*} \mid \tilde{\mathbf{q}}^{\mathcal{T}}\right)$$

It is difficult to implement an optimization solution of the foregoing formula. Therefore, an optimal solution may be obtained by minimizing an L2 norm between $\tilde{q}^{\mathcal{S}^*}$ and $\tilde{q}^{\mathcal{T}}$. Therefore, a loss function of distribution rectification distillation may be written as follows:

$$\mathcal{L}_{\mathcal{DRD}} = \mathrm{E}\left[||\tilde{q}^{\mathcal{S}^*} - \tilde{q}^{\mathcal{T}}||_2\right]$$

In a possible implementation, a second loss may be further constructed based on a difference between a detection result ground-truth of an image and information about a first bounding box that has a correspondence with the detection result ground-truth.

For example, for an overall training loss function of a model, refer to the following formula, where $\mathcal{L}_{\mathcal{GT}}$ is a

common detection loss of a coordinate regression task or the like, and $\lambda$ is a trade-off hyperparameter:

$$\mathcal{L} = \mathcal{L}_{\mathcal{GT}}(\text{y}^{\text{GT}}, \text{y}^{\text{S}}) + \lambda \mathcal{L}_{\mathcal{DRD}}(\tilde{\text{q}}^{\mathcal{S}^*}, \tilde{\text{q}}^{\mathcal{T}})$$

603: Update the first neural network and the first query based on the first loss.

Embodiments of this application provide a data processing method. The method includes: obtaining a first query (query) corresponding to a first neural network and a second query corresponding to a second neural network, where the first query is a query obtained by maximizing an information entropy of a query corresponding to the first neural network, the first neural network is a model obtained by compressing the second neural network, and the first neural network and the first neural network are used for object detection; determining a first loss based on the first query and the second query, where the first loss indicates to minimize an information difference between the second query and the first query; and updating the first neural network and the first query based on the first loss. In this application, an information difference between a query (query) of a student model and a query of a teacher model is minimized, to minimize an information difference between the student model and the teacher model, and improve model precision of a compressed model.

In embodiments of this application, an information bottleneck optimization problem of the student model is modeled as a bilevel optimization model, and a bilevel distribution rectification distillation module is provided. During lower-level optimization, distribution alignment (DA) is performed on the query of the student model according to guidance of a Gaussian distribution, to maximize self-information of the student query. During upper-level optimization, a new foreground-aware query matching (FQM) method is introduced to filter out a low-quality student query, and exact one-to-one query matching is performed between the student and the teacher to minimize a conditional entropy between the student query and the teacher query, to effectively transfer teacher information to the student model. In the technical solutions in embodiments of this application, accuracy of the student model can be effectively improved through training optimization.

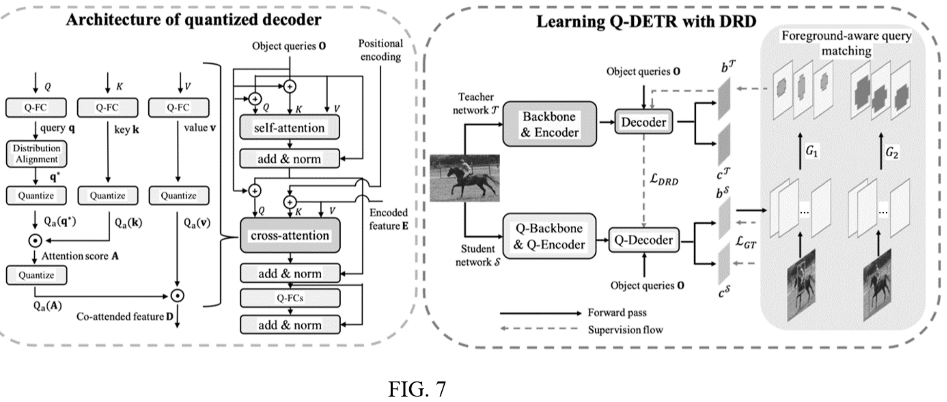

A diagram of a process in embodiments of this application may be shown in FIG. 7. A distribution rectification distillation (DRD) method is provided to rectify query information of a student model into corresponding query information of a teacher model, to eliminate a distribution difference of compressed query information and resolve an information distortion problem of an attention mechanism during model compression.

Specifically, a full-precision model is used as the teacher model, a compressed model is used as the student model, and an information bottleneck optimization problem of the student model is modeled as a bilevel optimization model. A bilevel optimization problem includes lower-level optimization for maximizing self-information of a student query and upper-level optimization for minimizing a conditional entropy between the student query and a teacher query, to eliminate a distribution difference between the query of the student model and the query of the teacher model. During lower-level optimization, distribution alignment is performed on a query according to guidance of a Gaussian distribution during forward propagation, to maximize self-information of the student query. During upper-level optimization, a new foreground-aware query matching method is introduced to filter out a low-quality student query, and exact one-to-one query matching is performed between the student and the teacher to minimize a difference between the student query and the teacher query, to effectively transfer teacher information to the student model. During lower-level optimization, an average value and a variance of the query of the student model are calculated. Based on a known distribution of the query, an optimal query value in a case in which a self-information entropy of the student query is the maximum may be obtained. In addition, because query data has a specific deviation, a learnable scale parameter and a learnable shift parameter are added based on an idea of batch normalization (batch normalization), to rectify an optimal student query. During upper-level optimization, an information difference between the student query and the teacher query needs to be minimized, and the minimization requires one-to-one matching between the student query and the teacher query. However, due to discreteness of algorithm matching and randomness of model training, ground-truth matching becomes a dynamic and unstable process. Therefore, matching is performed between a detection result ground-truth of an image and a detection result output by the student model, and a detection result that is output by the student model and that is greater than a specified threshold is retained. Then an object set of the student and an object set of the teacher may be obtained, to complete one-to-one matching between the student and the teacher. In embodiments of this application, a bilevel optimization problem is resolved by using the distribution alignment method and the foreground-aware query matching method, to effectively resolve an information distortion problem in a baseline model that occurs after a multi-head attention module is compressed.

The following describes beneficial effects of embodiments of this application with reference to specific experiments.

In embodiments of this application, a Q-DETR is trained based on two mainstream models: a DETR and an SMCA-DETR. An ImageNet ILSVRC12 dataset is used to pre-train and quantize a student backbone network. An AdamW optimizer is used to train the Q-DETR on a VOC dataset and a COCO dataset for 300 epochs (epoch) and 500 epochs

**EP 4 708 141 A1**

respectively at an initial learning rate of 1e-4, a weight decay of 1e-4, and a batch size of 16, and the learning rate is divided by 10 at the 200 epochs and the 400 epochs respectively. A Q-SMCA-DETR is trained for 50 epochs on the VOC dataset and the COCO dataset separately, and the learning rate is multiplied by 0.1 at the 40 epochs. A full-precision DETR-R101 and an SMCA-DETR-R101 with a VGG16 as a backbone are selected as teacher models.

First, abundant comparison experiments are performed based on the full-precision DETR model and a baseline quantization model, to verify validity of the module provided in embodiments of this application. In addition, a large quantity of comparison experiments are performed to compare detection precision of a baseline method and an LSQ method in embodiments of this application with that in a same framework on networks with different bits.

Table 1

| Method | #Bits | $AP_{50}$ | #Bits | $AP_{50}$ | #Bits | $AP_{50}$ |
|---|---|---|---|---|---|---|
| Real-valued | 32-32-32 | 83.3 | - | - | - | - |
| Baseline | 4-4-8 | 78.0 | 3-3-8 | 76.8 | 2-2-8 | 69.7 |
| +DA | 4-4-8 | 78.8 | 3-3-8 | 78.0 | 2-2-8 | 71.6 |
| +FQM | 4-4-8 | 81.5 | 3-3-8 | 80.9 | 2-2-8 | 74.9 |
| **+DA+FQM (Q-DETR)** | 4-4-8 | **82.7** | 3-3-8 | **82.1** | 2-2-8 | **76.4** |

A result of the method provided in embodiments of this application in an object detection task is shown in Table 1. It can be learned from Table 1 that, when the distribution alignment (DA, to be specific, the foregoing lower-level optimization and upper-level optimization processes) and the foreground-aware query matching (FQM, to be specific, a manner of matching between a query of a student model and a query of a teacher model) provided in embodiments of this application are separately used, detection precision can be improved; and when the two methods are used together, model performance can be further significantly improved. For example, compared with that in a 2-bit baseline model, AP50 increases by 1.9% when the DA is used alone, and AP50 increases by 5.2% when the FQM is used alone. When the DA and the FQM are combined, performance is improved by 6.7%.

Table 2

| Model | Method | #Bits | AP | $AP_{50}$ | $AP_{75}$ |
|---|---|---|---|---|---|
| DETR-R50 | Real-valued | 32-32-32 | 59.5 | 83.3 | 64.7 |
| | Percentile | 8-8-8 | 54.7 | 79.2 | 60.1 |
| | VT-PTQ | | 57.6 | 82.3 | 63.1 |
| | LSQ | 4-4-8 | 49.7 | 76.9 | 53.0 |
| | Baseline | | 51.3 | 78.0 | 54.1 |
| | **Q-DETR** | | **57.1** | **82.7** | **61.5** |
| | LSQ | 3-3-8 | 47.0 | 75.3 | 49.1 |
| | Baseline | | 49.2 | 76.8 | 51.8 |
| | **Q-DETR** | | **56.8** | **82.1** | **61.2** |
| | LSQ | 2-2-8 | 42.6 | 68.2 | 44.8 |
| | Baseline | | 44.0 | 69.7 | 45.8 |
| | **Q-DETR** | | **50.7** | **76.4** | **54.1** |
| SMCA-DETR -R50 | Real-valued | 32-32-32 | 56.7 | 83.7 | 62.0 |
| | Percentile | 8-8-8 | 54.7 | 79.2 | 60.1 |
| | VT-PTQ | | 55.9 | 83.0 | 61.3 |
| | LSQ | 4-4-8 | 49.6 | 78.6 | 53.4 |
| | Baseline | | 50.7 | 79.5 | 55.4 |
| | **Q-DETR** | | **56.2** | **83.3** | **61.6** |
| | LSQ | 3-3-8 | 47.7 | 76.5 | 51.7 |
| | Baseline | | 49.9 | 77.5 | 53.6 |
| | **Q-DETR** | | **54.3** | **82.6** | **59.5** |

(continued)

| Model | Method | #Bits | AP | AP$_{50}$ | AP$_{75}$ |
|---|---|---|---|---|---|
| | LSQ | | 42.3 | 69.7 | 44.8 |
| | Baseline | 2-2-8 | 43.9 | 70.4 | 46.1 |
| | **Q-DETR** | | **50.2** | **76.7** | **52.6** |

A large quantity of experiments are performed on the VOC dataset based on the DETR-R50 network and the SMCA-DETR-R50 network, and comparison is performed with a 2-bit/3-bit/4-bit baseline and a 2-bit/3-bit/4-bit LSQ that are based on the same framework. A result is shown in Table 2. The result testifies an advantage of the Q-DETR provided in embodiments of this application in terms of model performance. Compared with the 2-bit/3-bit/4-bit quantization baseline and the 2-bit/3-bit/4-bit LSQ, the DETR-R50 and the SMCA-DETR-R50 have performance higher by 6.3%-5.3%-4.7% and 6.3%-5.1%-3.8% respectively in models with three types of bits.

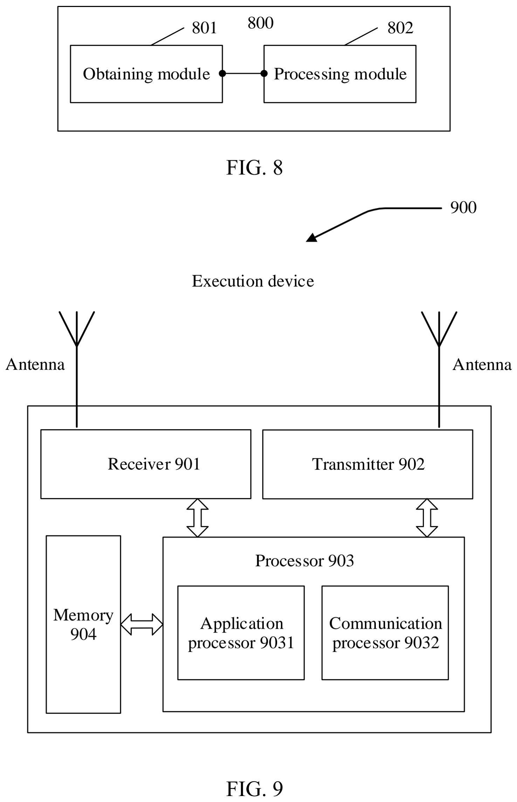

FIG. 8 is a diagram of a structure of a data processing apparatus according to an embodiment of this application. As shown in FIG. 8, the data processing apparatus 800 provided in this embodiment of this application includes:

an obtaining module 801, configured to obtain a first query (query) corresponding to a first neural network and a second query corresponding to a second neural network, where the first query is a query obtained by maximizing an information entropy of a query corresponding to the first neural network, the first neural network is a model obtained by compressing the second neural network, and the first neural network and the first neural network are used for object detection, where

for descriptions of the obtaining module 801, refer to the descriptions of step 601 in the foregoing embodiments, and details are not described herein again; and

a processing module 802, configured to: determine a first loss based on the first query and the second query, where the first loss indicates to minimize an information difference between the second query and the first query; and

update the first neural network and the first query based on the first loss, where

for descriptions of the processing module 802, refer to the descriptions of steps 602 and 603 in the foregoing embodiments, and details are not described herein again.

In a possible implementation, the first neural network is obtained by performing 2-bit, 3-bit, or 4-bit quantization on the second neural network.

In a possible implementation, the processing module is further configured to:

perform object detection on a target image based on the first query and the first neural network, to obtain information about M first bounding boxes;

obtain a detection result ground-truth corresponding to the target image, where the detection result ground-truth includes a plurality of second bounding boxes; and

determine M1 first bounding boxes from the M first bounding boxes based on a positional relationship between the first bounding box and the second bounding box, where each of the M1 first bounding boxes corresponds to one second bounding box, a positional relationship between each of the M1 first bounding boxes and a corresponding second bounding box meets a first preset condition, and the first preset condition is related to a degree of overlapping between areas in which bounding boxes are located; and

the first query is a query corresponding to the M1 first bounding boxes.

In a possible implementation, the processing module is further configured to:

perform object detection on the target image based on the second query and the second neural network, to obtain information about N third bounding boxes; and

determine M1 third bounding boxes from the N third bounding boxes based on a positional relationship between each of the M1 first bounding boxes and the third bounding box, where each of the M1 first bounding boxes corresponds to one second bounding box, a positional relationship between each of the M1 first bounding boxes and a corresponding third bounding box meets a second preset condition, and the second preset condition is related to a degree of overlapping between areas in which bounding boxes are located; and

the second query is a query corresponding to the M1 third bounding boxes.

In a possible implementation, the information about the first bounding box and the information about the third bounding box include a position and a size of the bounding box, and a category corresponding to image content of the bounding box.

In a possible implementation, the first query is obtained by adjusting, to a distribution of a preset type, a distribution of the query corresponding to the first neural network.

In a possible implementation, the distribution of the preset type is a Gaussian distribution.

In a possible implementation, the information difference is represented by an L2 norm or a conditional entropy.

In a possible implementation, the first neural network includes a first backbone network, a first encoder, and a first decoder, and the second neural network includes a second backbone network, a second encoder, and a second decoder; and

the processing module is specifically configured to:

obtain a first intermediate output based on the target image by using the first backbone network and the first encoder;
process the first query and the first intermediate output by using the first decoder;
obtain a second intermediate output based on the target image by using the second backbone network and the second encoder; and
process the second query and the second intermediate output by using the second decoder.

The following describes an execution device provided in embodiments of this application. FIG. 9 is a diagram of a structure of an execution device according to an embodiment of this application. The execution device 900 may be specifically a virtual reality VR device, a mobile phone, a tablet computer, a notebook computer, an intelligent wearable device, a monitoring data processing device, a server, or the like. This is not limited herein. Specifically, the execution device 900 includes a receiver 901, a transmitter 902, a processor 903 (there may be one or more processors 903 in the execution device 900, and one processor is used as an example in FIG. 9), and a memory 904. The processor 903 may include an application processor 9031 and a communication processor 9032. In some embodiments of this application, the receiver 901, the transmitter 902, the processor 903, and the memory 904 may be connected through a bus or in another manner.

The memory 904 may include a read-only memory and a random access memory, and provide instructions and data for the processor 903. A part of the memory 904 may further include a non-volatile random access memory (non-volatile random access memory, NVRAM). The memory 904 stores processor and operation instructions, an executable module, or a data structure, or a subset thereof, or an extended set thereof. The operation instructions may include various operation instructions for implementing various operations.

The processor 903 controls an operation of the execution device. During specific application, the components of the execution device are coupled together through a bus system. In addition to a data bus, the bus system may further include a power bus, a control bus, a status signal bus, and the like. However, for clarity of description, various buses are marked as the bus system in the figure.

The methods disclosed in the foregoing embodiments of this application may be applied to the processor 903 or implemented by the processor 903. The processor 903 may be an integrated circuit chip and has a signal processing capability. During implementation, the steps of the foregoing methods may be performed by a hardware integrated logic circuit in the processor 903 or by using instructions in a form of software. The processor 903 may be a general-purpose processor, a digital signal processor (digital signal processor, DSP), a microprocessor, or a microcontroller. The processor 903 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 903 may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory 904, and the processor 903 reads information in the memory 904 and performs the steps of the foregoing methods in combination with hardware of the processor 903.

The receiver 901 may be configured to receive input digit or character information, and generate a signal input related to a related setting and function control of the execution device. The transmitter 902 may be configured to output digit or character information through a first interface. The transmitter 902 may be further configured to send instructions to a disk group through the first interface, to modify data in the disk group. The transmitter 902 may further include a display device, for example, a display.

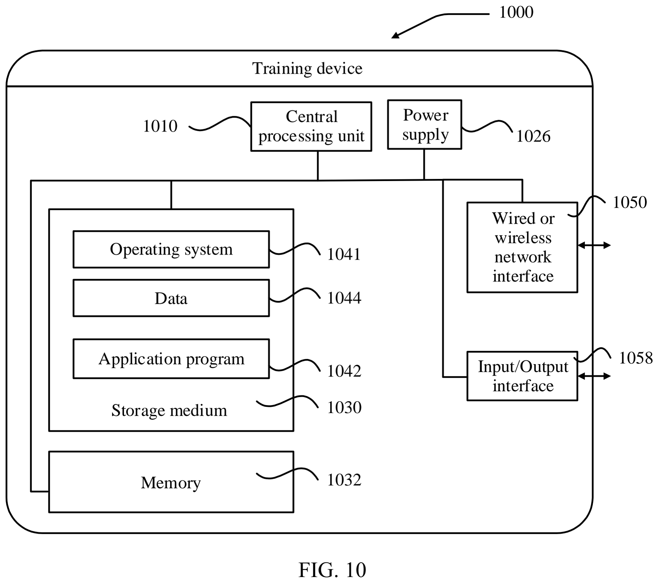

An embodiment of this application further provides a training device. FIG. 10 is a diagram of a structure of a training device according to an embodiment of this application. Specifically, the training device 1000 is implemented by one or more servers. The training device 1000 may vary greatly due to different configurations or performance, and may include one or more central processing units (central processing units, CPU) 1010 (for example, one or more processors), a memory 1032, and one or more storage media 1030 (for example, one or more mass storage devices) for storing an application program 1042 or data 1044. The memory 1032 and the storage medium 1030 may perform transient storage or persistent storage. A program stored in the storage medium 1030 may include one or more modules (not shown in the figure), and each module may include a series of instruction operations for the training device. Further, the central processing unit 1010 may be configured to communicate with the storage medium 1030, and perform, on the training device 1000, a series of instruction operations in the storage medium 1030.

The training device 1000 may further include one or more power supplies 1026, one or more wired or wireless network interfaces 1050, one or more input/output interfaces 1058, or one or more operating systems 1041, for example, Windows Server™, Mac OS X™, Unix™, Linux™, or FreeBSD™.

In this embodiment of this application, the central processing unit 1010 is configured to perform an action related to model training in the foregoing embodiments.

An embodiment of this application further provides a computer program product. When the computer program product is run on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program for signal processing. When the program is run on a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, to enable a chip in an execution device to perform the data processing method described in the foregoing embodiments, or enable a chip in a training device to perform the data processing method described in the foregoing embodiments. Optionally, the storage unit is a storage unit in the chip, for example, a register or a buffer. Alternatively, the storage unit may be a storage unit in a radio access device but outside the chip, for example, a read-only memory (read-only memory, ROM), another type of static storage device that can store static information and instructions, or a random access memory (random access memory, RAM).

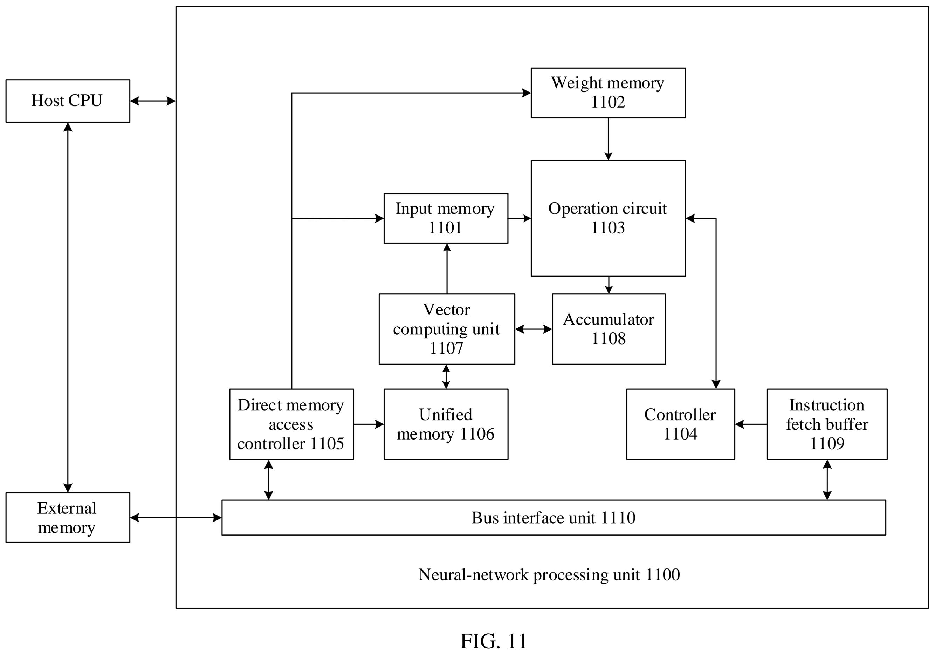

Specifically, FIG. 11 is a diagram of a structure of a chip according to an embodiment of this application. The chip may be represented by a neural-network processing unit NPU 1100. The NPU 1100 is mounted to a host CPU (Host CPU) as a coprocessor, and the host CPU assigns a task to the NPU 1100. A core part of the NPU is an operation circuit 1103. A controller 1104 controls the operation circuit 1103 to extract matrix data in a memory and perform a multiplication operation.

In some implementations, the operation circuit 1103 includes a plurality of process elements (Process Element, PE). In some implementations, the operation circuit 1103 is a two-dimensional systolic array. The operation circuit 1103 may alternatively be a one-dimensional systolic array or another electronic circuit capable of performing mathematical operations such as multiplication and addition. In some implementations, the operation circuit 1103 is a general-purpose matrix processor.

For example, it is assumed that there are an input matrix A, a weight matrix B, and an output matrix C. The operation circuit fetches, from a weight memory 1102, data corresponding to the matrix B, and caches the data in each PE in the operation circuit. The operation circuit fetches data of the matrix A from an input memory 1101 to perform a matrix operation on the matrix B, and stores an obtained partial result or an obtained final result of the matrix in an accumulator (accumulator) 1108.

A unified memory 1106 is configured to store input data and output data. Weight data is directly transferred to the weight memory 1102 through a direct memory access controller (Direct Memory Access Controller, DMAC) 1105. Input data is also transferred to the unified memory 1106 through the DMAC.

A BIU is a bus interface unit, namely, a bus interface unit 1110, and is used for interaction between an AXI bus, and the DMAC and an instruction fetch buffer (Instruction Fetch Buffer, IFB) 1109.

The bus interface unit (Bus Interface Unit, BIU for short) 1110 is used for the instruction fetch buffer 1109 to obtain instructions from an external memory, and is further used for the direct memory access controller 1105 to obtain raw data of the input matrix A or the weight matrix B from the external memory.

The DMAC is mainly configured to transfer input data in the external memory DDR to the unified memory 1106, transfer weight data to the weight memory 1102, or transfer input data to the input memory 1101.

A vector computing unit 1107 includes a plurality of operation processing units, and if needed, performs further processing, for example, vector multiplication, vector addition, an exponential operation, a logarithmic operation, or magnitude comparison, on an output of the operation circuit 1103. The vector computing unit is mainly used for network computing, for example, batch normalization (batch normalization), pixel-level summation, or upsampling on a feature plane, at a non-convolutional/fully connected layer of a neural network.

In some implementations, the vector computing unit 1107 can store a processed output vector in the unified memory 1106. For example, the vector computing unit 1107 may apply a linear function or a nonlinear function to the output of the operation circuit 1103, for example, perform linear interpolation on a feature plane extracted at a convolutional layer. For another example, the vector computing unit 1107 may apply a linear function or a nonlinear function to a vector of an accumulated value, to generate an activation value. In some implementations, the vector computing unit 1107 generates a normalized value, a pixel-level summation value, or both a normalized value and a pixel-level summation value. In some implementations, the processed output vector can be used as an activation input for the operation circuit 1103, for example, used at a subsequent layer of the neural network.

The instruction fetch buffer (instruction fetch buffer) 1109 connected to the controller 1104 is configured to store instructions to be used by the controller 1104.

All of the unified memory 1106, the input memory 1101, the weight memory 1102, and the instruction fetch buffer 1109 are on-chip memories. The external memory is private for a hardware architecture of the NPU.

Any one of the processors mentioned above may be a general-purpose central processing unit, a microprocessor, an ASIC, or one or more integrated circuits for controlling execution of the foregoing programs.

In addition, it should be noted that the described apparatus embodiments are merely examples. The units described as separate parts may or may not be physically separated, and parts shown as units may or may not be physical units, to be specific, may be located in one place, or may be distributed on a plurality of network units. Some or all of the modules may be selected according to actual requirements to achieve the objectives of the solutions of embodiments. In addition, in the accompanying drawings of the apparatus embodiments provided in this application, a connection relationship between modules indicates that the modules have a communication connection, which may be specifically implemented as one or more communication buses or signal cables.

According to the descriptions of the foregoing implementations, a person skilled in the art can clearly understand that this application may be implemented by software in combination with necessary general-purpose hardware, or certainly may be implemented by dedicated hardware, including an application-specific integrated circuit, a dedicated CPU, a dedicated memory, a dedicated component, or the like. Usually, any function performed by a computer program may be easily implemented by corresponding hardware. In addition, a specific hardware structure used to implement a same function may be in various forms, for example, in a form of an analog circuit, a digital circuit, or a dedicated circuit. However, in this application, an implementation by using a software program is a better implementation in most cases. Based on such an understanding, the technical solutions of this application essentially or the part contributing to the conventional technology may be implemented in a form of a software product. The computer software product is stored in a readable storage medium, for example, a floppy disk of a computer, a USB flash drive, a removable hard disk drive, a ROM, a RAM, a magnetic disk, or a compact disc, and includes several instructions for instructing a computer device (which may be a personal computer, a training device, a network device, or the like) to perform all or some of methods in embodiments of this application.

All or some of the foregoing embodiments may be implemented by software, hardware, firmware, or any combination thereof. When the embodiments are implemented by software, all or some of the embodiments may be implemented in a form of a computer program product.

The computer program product includes one or more computer instructions. When the computer program instructions are loaded and executed on a computer, all or some of the processes or the functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored on a computer, or a data storage device, for example, a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

## Claims

1. A data processing method, wherein the method comprises:

obtaining a first query corresponding to a first neural network and a second query corresponding to a second neural network, wherein the first query is a query obtained by maximizing an information entropy of a query corresponding to the first neural network, the first neural network is a model obtained by compressing the second neural network, and the first neural network and the first neural network are used for object detection;

determining a first loss based on the first query and the second query, wherein the first loss indicates to minimize an information difference between the second query and the first query; and

updating the first neural network and the first query based on the first loss.

2.   The method according to claim 1, wherein the first neural network is obtained by performing 2-bit, 3-bit, or 4-bit quantization on the second neural network.

3.   The method according to claim 1 or 2, wherein the method further comprises:

performing object detection on a target image based on the first query and the first neural network, to obtain information about M first bounding boxes;

obtaining a detection result ground-truth corresponding to the target image, wherein the detection result ground-truth comprises a plurality of second bounding boxes; and

determining M1 first bounding boxes from the M first bounding boxes based on a positional relationship between the first bounding box and the second bounding box, wherein each of the M1 first bounding boxes corresponds to one second bounding box, a positional relationship between each of the M1 first bounding boxes and a corresponding second bounding box meets a first preset condition, and the first preset condition is related to a degree of overlapping between areas in which bounding boxes are located; and

the first query is a query corresponding to the M1 first bounding boxes.

4.   The method according to claim 3, wherein the method further comprises:

performing object detection on the target image based on the second query and the second neural network, to obtain information about N third bounding boxes; and

determining M1 third bounding boxes from the N third bounding boxes based on a positional relationship between each of the M1 first bounding boxes and the third bounding box, wherein each of the M1 first bounding boxes corresponds to one second bounding box, a positional relationship between each of the M1 first bounding boxes and a corresponding third bounding box meets a second preset condition, and the second preset condition is related to a degree of overlapping between areas in which bounding boxes are located; and

the second query is a query corresponding to the M1 third bounding boxes.

5.   The method according to claim 3 or 4, wherein the information about the first bounding box and the information about the third bounding box comprise a position and a size of the bounding box, and a category corresponding to image content of the bounding box.

6.   The method according to any one of claims 1 to 5, wherein the first query is obtained by adjusting, to a distribution of a preset type, a distribution of the query corresponding to the first neural network.

7.   The method according to claim 6, wherein the distribution of the preset type is a Gaussian distribution.

8.   The method according to any one of claims 1 to 7, wherein the information difference is represented by an L2 norm or a conditional entropy.

9.   The method according to any one of claims 3 to 8, wherein the first neural network comprises a first backbone network, a first encoder, and a first decoder, and the second neural network comprises a second backbone network, a second encoder, and a second decoder;

performing object detection on the target image based on the first query and the first neural network comprises:

obtaining a first intermediate output based on the target image by using the first backbone network and the first encoder; and

processing the first query and the first intermediate output by using the first decoder; and

performing object detection on the target image based on the second query and the second neural network comprises:

obtaining a second intermediate output based on the target image by using the second backbone network and the second encoder; and

processing the second query and the second intermediate output by using the second decoder.

10. A data processing method, wherein the method comprises:

   obtaining an image; and
   performing object detection on the image by using an updated first neural network and an updated first query that are obtained according to any one of claims 1 to 9, to obtain a processing result.

11. A data processing apparatus, wherein the apparatus comprises:

   an obtaining module, configured to obtain a first query corresponding to a first neural network and a second query corresponding to a second neural network, wherein the first query is a query obtained by maximizing an information entropy of a query corresponding to the first neural network, the first neural network is a model obtained by compressing the second neural network, and the first neural network and the first neural network are used for object detection; and
   a processing module, configured to: determine a first loss based on the first query and the second query, wherein the first loss indicates to minimize an information difference between the second query and the first query; and update the first neural network and the first query based on the first loss.

12. The apparatus according to claim 11, wherein the first neural network is obtained by performing 2-bit, 3-bit, or 4-bit quantization on the second neural network.

13. The apparatus according to claim 11 or 12, wherein the processing module is further configured to:

   perform object detection on a target image based on the first query and the first neural network, to obtain information about M first bounding boxes;
   obtain a detection result ground-truth corresponding to the target image, wherein the detection result ground-truth comprises a plurality of second bounding boxes; and
   determine M1 first bounding boxes from the M first bounding boxes based on a positional relationship between the first bounding box and the second bounding box, wherein each of the M1 first bounding boxes corresponds to one second bounding box, a positional relationship between each of the M1 first bounding boxes and a corresponding second bounding box meets a first preset condition, and the first preset condition is related to a degree of overlapping between areas in which bounding boxes are located; and
   the first query is a query corresponding to the M1 first bounding boxes.

14. The apparatus according to claim 13, wherein the processing module is further configured to:

   perform object detection on the target image based on the second query and the second neural network, to obtain information about N third bounding boxes; and
   determine M1 third bounding boxes from the N third bounding boxes based on a positional relationship between each of the M1 first bounding boxes and the third bounding box, wherein each of the M1 first bounding boxes corresponds to one second bounding box, a positional relationship between each of the M1 first bounding boxes and a corresponding third bounding box meets a second preset condition, and the second preset condition is related to a degree of overlapping between areas in which bounding boxes are located; and
   the second query is a query corresponding to the M1 third bounding boxes.

15. The apparatus according to claim 13 or 14, wherein the information about the first bounding box and the information about the third bounding box comprise a position and a size of the bounding box, and a category corresponding to image content of the bounding box.

16. The apparatus according to any one of claims 11 to 15, wherein the first query is obtained by adjusting, to a distribution of a preset type, a distribution of the query corresponding to the first neural network.

17. The apparatus according to claim 16, wherein the distribution of the preset type is a Gaussian distribution.

18. The apparatus according to any one of claims 11 to 17, wherein the information difference is represented by an L2 norm or a conditional entropy.

19. The apparatus according to any one of claims 11 to 18, wherein the first neural network comprises a first backbone network, a first encoder, and a first decoder, and the second neural network comprises a second backbone network, a second encoder, and a second decoder; and
the processing module is specifically configured to:

obtain a first intermediate output based on the target image by using the first backbone network and the first encoder; and
process the first query and the first intermediate output by using the first decoder;
obtain a second intermediate output based on the target image by using the second backbone network and the second encoder; and
process the second query and the second intermediate output by using the second decoder.

20. A data processing apparatus, wherein the apparatus comprises:

an obtaining module, configured to obtain an image; and
a processing module, configured to perform object detection on the image by using an updated first neural network and an updated first query that are obtained according to any one of claims 1 to 9, to obtain a processing result.

21. A computer storage medium, wherein the computer storage medium stores one or more instructions, and when the instructions are executed by one or more computers, the one or more computers are enabled to perform the operations of the method according to any one of claims 1 to 10.

22. A computer program product, comprising computer-readable instructions, wherein when the computer-readable instructions are run on a computer device, the computer device is enabled to perform the method according to any one of claims 1 to 10.

23. A system, comprising at least one processor and at least one memory, wherein the processor and the memory are connected to and communicate with each other through a communication bus, wherein

the at least one memory is configured to store code; and
the at least one processor is configured to execute the code to perform the method according to any one of claims 1 to 10.

FIG. 1A

102

101

Parameter →| Image processing application |→ Processing result

103

## FIG. 1B

Parameter →

← Processing result

Terminal 100          Server 200

## FIG. 1C

Terminal 100

FIG. 1D

FIG. 2

FIG. 3

Cloud platform

Image processing service or model compression service

**Cloud environment**

1. Activate a content moderation service

2. Download an SDK

4. Invoke the service

5. The service responds

3. Import an environment configuration and an SDK project

Local development environment

Application

FIG. 4

Planning and control (obstacle avoidance/
traffic light decision-making/traffic sign
decision-making)

Planning and control (obstacle avoidance)

Laser ranging fusion

Automatic parking assist/Composition
positioning

Input
image

FIG. 5A

Image processing result

Fully connected layer 230

Output layer 240

Hidden layer n (23n)

Hidden layer 2 (232)

Hidden layer 1 (231)

Convolutional layer/Pooling layer 220

226

225

224

223

222

221

Convolutional neural network (CNN) 200

Input layer 210

To-be-processed image

FIG. 5B

FIG. 5C

FIG. 5D

FIG. 5E

EP 4 708 141 A1

Obtain a first query (query) corresponding to a first neural network and a second query corresponding to a second neural network, where the first query is a query obtained by maximizing an information entropy of a query corresponding to the first neural network, the first neural network is a model obtained by compressing the second neural network, and the first neural network and the first neural network are used for object detection

601

Determine a first loss based on the first query and the second query, where the first loss indicates to minimize an information difference between the second query and the first query

602

Update the first neural network and the first query based on the first loss

603

FIG. 6

FIG. 7

800

801 Obtaining module

802 Processing module

FIG. 8

900

Execution device

Antenna

Antenna

Receiver 901

Transmitter 902

Processor 903

Memory 904

Application processor 9031

Communication processor 9032

FIG. 9

1000

Training device

1010

Central processing unit

Power supply

1026

Operating system — 1041

Data — 1044

Application program — 1042

Storage medium — 1030

Memory — 1032

Wired or wireless network interface — 1050

Input/Output interface — 1058

FIG. 10

Weight memory 1102

Operation circuit 1103

Accumulator 1108

Controller 1104

Instruction fetch buffer 1109

Input memory 1101

Vector computing unit 1107

Unified memory 1106

Direct memory access controller 1105

Bus interface unit 1110

Neural-network processing unit 1100

Host CPU

External memory

FIG. 11

## INTERNATIONAL SEARCH REPORT

| International application No. |
|---|
| **PCT/CN2024/094605** |

| **A.** | **CLASSIFICATION OF SUBJECT MATTER** |
|---|---|

G06N 3/0495(2023.01)i

According to International Patent Classification (IPC) or to both national classification and IPC

| **B.** | **FIELDS SEARCHED** |
|---|---|

Minimum documentation searched (classification system followed by classification symbols)

IPC: G06N, G06K

Documentation searched other than minimum documentation to the extent that such documents are included in the fields searched

Electronic data base consulted during the international search (name of data base and, where practicable, search terms used)

CNABS; CNTXT; ENTXT; ENTXTC; VEN; DWPI; WPABS; CNKI: Query, compres+, model, entropy, loss, transform, image, picture, graphics, object detection, 模型, 压缩, 熵, 损失, 查询, 图像, 图片, 目标检测

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| A | CN 112257858 A (HUAWEI TECHNOLOGIES CO., LTD.) 22 January 2021 (2021-01-22) see entire document | 1-23 |
| A | CN 112183718 A (HUAWEI TECHNOLOGIES CO., LTD.) 05 January 2021 (2021-01-05) see entire document | 1-23 |
| A | CN 106778867 A (BEIJING KUANGSHI TECHNOLOGY CO., LTD.; BEIJING XIAOKONG SCIENCE & TECHNOLOGY CO., LTD.) 31 May 2017 (2017-05-31) see entire document | 1-23 |
| A | US 2019287515 A1 (MICROSOFT TECHNOLOGY LICENSING, LLC) 19 September 2019 (2019-09-19) see entire document | 1-23 |
| PX | CN 116861968 A (HUAWEI TECHNOLOGIES CO., LTD.) 10 October 2023 (2023-10-10) description, paragraphs [0001]-[0332], figures 1-11, and claims 1-23 | 1-23 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 August 2024** | **26 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/094605**

| Patent document cited in search report | | | Publication date (day/month/year) | Patent family member(s) | | | Publication date (day/month/year) |
|---|---|---|---|---|---|---|---|
| CN | 112257858 | A | 22 January 2021 | None | | | |
| CN | 112183718 | A | 05 January 2021 | None | | | |
| CN | 106778867 | A | 31 May 2017 | US | 2018174046 | A1 | 21 June 2018 |
| | | | | US | 10671919 | B2 | 02 June 2020 |
| US | 2019287515 | A1 | 19 September 2019 | US | 10643602 | B2 | 05 May 2020 |
| CN | 116861968 | A | 10 October 2023 | None | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310621628